# EUROPEAN PATENT APPLICATION

(11) **EP 4 804 683 A1**
(43) Date of publication of application: **09.09.2026**
(21) Application number: 23957362.9
(22) Date of filing: 03.11.2023
(51) Int. Cl.: H04W 72/21, H04W 72/12

(54) **COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); CAO, Jianfei, Dongguan, Guangdong 523860 (CN)
(74) Representative: RGTH
(86) International application number: PCT/CN2023/129772
(87) International publication number: WO 2025/091506

(57) **Abstract**

The present application relates to communication methods and devices. A method comprises: on the basis of at least one of configuration information of a first higher-layer parameter and configuration information of a first transmission mode, a terminal device determining a multiplexing mode; and on the basis of the multiplexing mode, the terminal device transmitting UCI carried by one or more PUCCHs. The embodiments of the present application can solve the problem of multiplexing UCI carried by PUCCHs when terminal devices simultaneously send PUCCHs and PUSCHs or simultaneously send a plurality of PUCCHs.

## Description

### TECHNICAL FIELD

The present application relates to the field of communication, and more particularly, to a communication method and a device.

### BACKGROUND

A distributed communication system may also be referred to as a distributed system, a distributed deployment communication system, a distributed deployment system, or the like. A distributed communication system is configured with multiple transmission/reception points (TRPs), and the multiple TRPs provide services for terminal devices respectively. To remove restrictions on system scheduling flexibility, in a multi-TRPs scenario, a terminal device is allowed to simultaneously transmit physical uplink control channel (PUCCH) and physical uplink shared channel (PUSCH), or to simultaneously transmit multiple PUCCHs. In this case, how to multiplex uplink control information (UCI) carried by the PUCCH is a technical problem that needs to be solved.

### SUMMARY

The embodiments of the present application provide a communication method and device, which can solve the problem of multiplexing UCI carried by a PUCCH when a terminal device simultaneously transmits PUCCH and PUSCH or simultaneously transmits multiple PUCCHs.

The embodiments of the present application provide a communication method, which includes:
determining, by a terminal device, a multiplexing manner according to at least one of: configuration information of a first higher-layer parameter or configuration information of a first transmission manner; and
transmitting, by the terminal device, uplink control information (UCI) carried by one or more physical uplink control channels (PUCCHs) according to the multiplexing manner.

The embodiments of the present application provide a communication method, which includes:
configuring, by a network device, for a terminal device at least one of: a first higher-layer parameter or a first transmission manner; and
receiving, by the network device, UCI carried by one or more PUCCHs transmitted by the terminal device according to a multiplexing manner corresponding to at least one of: the first higher-layer parameter or the first transmission manner.

The embodiments of the present application provide a terminal device, which includes:
a first processing unit, configured to determine a multiplexing manner according to at least one of: configuration information of a first higher-layer parameter or configuration information of a first transmission manner; and
a first transceiving unit, configured to transmit UCI carried by one or more PUCCHs according to the multiplexing manner.

The embodiments of the present application provide a network device, which includes:
a second processing unit, configured to configure for a terminal device at least one of: a first higher-layer parameter or a first transmission manner; and
a second transceiving unit, configured to receive UCI carried by one or more PUCCHs transmitted by the terminal device according to a multiplexing manner corresponding to at least one of: the first higher-layer parameter or the first transmission manner.

The embodiments of the present application provide a terminal device, which includes: a transceiver, a processor, and a memory. The memory is configured to store a computer program, the transceiver is configured to communicate with other devices, and the processor is configured to invoke the computer program stored in the memory and execute the computer program, to enable the terminal device to perform the communication method.

The embodiments of the present application provide a network device, which includes: a transceiver, a processor, and a memory. The memory is configured to store a computer program, the transceiver is configured to communicate with other devices, and the processor is configured to invoke the computer program stored in the memory and execute the computer program, to enable the network device to perform the communication method.

The embodiments of the present application provide a chip for implementing the communication method.

Specifically, the chip includes: a processor, configured to invoke a computer program from a memory and execute the computer program, to enable a device equipped with the chip to perform the communication method.

The embodiments of the present application provide a computer-readable storage medium for storing a computer program that, when executed by a device, enables the device to perform the communication method.

The embodiments of the present application provide a computer program product, which includes computer program instructions that enable a computer to perform the communication method.

The embodiments of the present application provide a computer program that, when executed on a computer, enables the computer to perform the communication method.

In the embodiments of the present application, the multiplexing manner is determined based on at least one of the configuration information of the first higher-layer parameter or the configuration information of the first transmission manner, and the UCI carried by one or more PUCCHs is transmitted based on the multiplexing manner to resolve the problem of multiplexing the UCI carried by the PUCCH.

### BRIEF DESCRIPTION OF THE DRAWINGS

FIG. 1 is a schematic diagram of a multi-panel/TRP transmission scenario.
FIG. 2A is a schematic diagram of a scenario where multiple PUCCHs are simultaneously transmitted.
FIG. 2B is a schematic diagram of a scenario where PUCCH and PUSCH are simultaneously transmitted.
FIG. 3 is a schematic flowchart of a communication method 300 according to an embodiment of the present application.
FIG. 4 is a schematic flowchart of a communication method 400 according to an embodiment of the present application.
FIG. 5A is a schematic diagram of one PUCCH completely overlapping with multiple PUSCHs in a time domain.
FIG. 5B is a schematic diagram of one PUCCH partially overlapping with multiple PUSCHs in a time domain.
FIG. 5C is a schematic diagram of one PUCCH and multiple PUSCHs being transmitted in a first time unit.
FIG. 6 is a schematic diagram of a first manner according to an embodiment of the present application.
FIG. 7A is a schematic diagram of multiple PUCCHs completely overlapping with one PUSCH in a time domain.
FIG. 7B is a schematic diagram of multiple PUCCHs partially overlapping with one PUSCH in a time domain.
FIG. 7C is a schematic diagram of multiple PUCCHs and one PUSCH being transmitted in a first time unit.
FIG. 8 is a schematic diagram of a third manner according to an embodiment of the present application.
FIG. 9A is a first schematic diagram of a fourth manner according to an embodiment of the present application.
FIG. 9B is a second schematic diagram of a fourth manner according to an embodiment of the present application.
FIG. 9C is a third schematic diagram of a fourth manner according to an embodiment of the present application.
FIG. 10 is a schematic diagram of multiple PUCCHs completely overlapping with multiple PUSCHs in a time domain.
FIG. 11 is a schematic diagram of a fifth manner according to an embodiment of the present application.
FIG. 12 is a schematic diagram of a sixth manner according to an embodiment of the present application.
FIG. 13 is a schematic block diagram of a terminal device 1300 according to an embodiment of the present application.
FIG. 14 is a schematic block diagram of a network device 1400 according to an embodiment of the present application.
FIG. 15 is a schematic block diagram of a communication device 1500 according to the embodiments of the present application.
FIG. 16 is a schematic block diagram of a chip 1600 according to the embodiments of the present application.
FIG. 17 is a schematic block diagram of a communication system 1700 according to the embodiments of the present application.

### DETAILED DESCRIPTION

Technical solutions in the embodiments of the present application will be described below with reference to the accompanying drawings in the embodiments of the present application.

The technical solutions in the embodiments of the present application may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-Generation (5G) system, or other communication systems.

Generally, traditional communication systems support a limited number of connections, and are easy to implement. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present application may also be applied to these communication systems as well.

In an implementation, the communication system in the embodiments of the present application may be applied to a carrier aggregation (CA) scenario, a dual connectivity (DC) scenario, and may also be applied to a standalone (SA) deployment scenario.

In an implementation, the communication system in the embodiments of the present application may be applied to an unlicensed spectrum, where the unlicensed spectrum may also be considered as a shared spectrum. Alternatively, the communication system in the embodiments of the present application may also be applied to a licensed spectrum, where the licensed spectrum may also be considered as an unshared spectrum.

In the embodiments of the present disclosure, various embodiments are described in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, or a user apparatus, etc.

The terminal device may be a station (STAION, ST) in the WLAN, or may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system such as an NR network, or a terminal device in a future evolved public land mobile network (PLMN) network, etc.

In the embodiments of the present application, the terminal device may be deployed on land, which includes indoor or outdoor, handheld, wearable, or in-vehicle; the terminal device may also be deployed on water (e.g., on a steamship); the terminal device may also be deployed in air (e.g., on an airplane, on a balloon, or on a satellite).

In the embodiments of the present application, the terminal device may be a mobile phone, a pad, a computers with a wireless transceiver function, a virtual reality (VR) terminal device, an augmented reality (AR) terminal device, a wireless terminal device in industrial control, a wireless terminal device in self-driving, a wireless terminal devices in remote medical, a wireless terminal device in smart grids, a wireless terminal device in transportation safety, a wireless terminal device in smart city, or a wireless terminal device in smart home, etc.

As an example but not a limitation, in the embodiments of the present application, the terminal device can also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement all or part of functions without relying on smart phones, such as smart watches or smart glasses, as well as devices, that only focus on a certain type of application function and need to be used in conjunction with other devices (e.g., a smart phone), such as various smart bands and smart jewelry that monitor physical signs, etc.

In the embodiments of the present application, the network device may be a device used for communicating with a mobile device, and the network device may be an access point (AP) in a WLAN, an evolutional base station (evolutional Node B, eNB or eNodeB) in an LTE, or a relay station or an access point, or an in-vehicle device, a wearable device, and a network device (gNB) in an NR network, or a network device in a future evolved PLMN network, or a network device in an NTN network, etc.

As an example but not a limitation, in the embodiments of the present application, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present application, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with a high speed.

It should be understood that, in the embodiments of the present disclosure, a device with a communication function in the network/system may be referred to as a communication device. The communication device may include a network device with a communication function and a terminal device with a communication function. The network device and the terminal device may be the specific devices in the embodiments of the present application, which will not be repeated here. The communication device may further include other devices in the communication system, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exists alone. In addition, a character "/" herein generally indicates that the associated objects before and after this character are in an "or" relationship.

It should be understood that, "indicate/indicated/indicating/indication" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present application, the term "correspond/corresponding/correspondence" may mean that there is a direct correspondence or an indirect correspondence between the two, or may mean that there is an association relationship between the two, or may mean a relationship of indicating and being indicated, or a relationship of configuring and being configured, etc.

To facilitate understanding of the technical solutions in the embodiments of the present application, the following describes related arts of the embodiments of the present application. These related arts are optional solutions and may be arbitrarily combined with the technical solutions of the embodiments of the present application, all of which fall within the protection scope of the embodiments of the present application.

### 1. Multi-panel/TRP transmission:

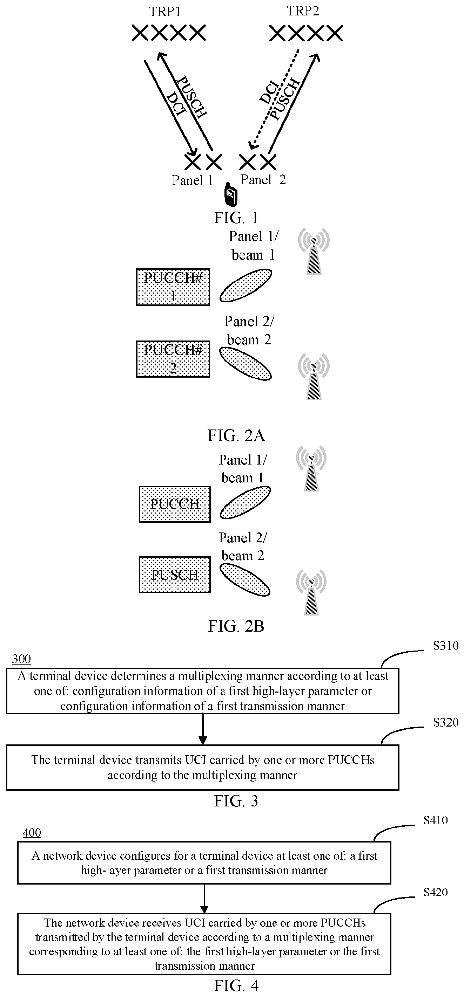

If a terminal is configured with multiple panels or panel ports, and supports simultaneous uplink transmission to multiple TRPs on multiple panels or panel ports, multiple uplink messages may be transmitted simultaneously on multiple panels to improve uplink spectrum efficiency. FIG. 1 is a schematic diagram of a multi-panel/TRP transmission scenario. As shown in FIG. 1, uplink transmission of multi-panel/TRP may be scheduled by a single downlink control information (DCI) or multiple DCI. Multiple PUSCHs transmitted by the UE are in a unified transmission configuration indicator (TCI) scenario, where the multiple PUSCHs are associated with different TCI states and may not overlap, partially overlap, or completely overlap in a time domain.

The backhaul connection between TRPs may be ideal or non-ideal. Under ideal backhaul, TRPs may dynamically exchange information quickly; and under non-ideal backhaul, due to larger delays, TRPs can only exchange information quasi-statically.

### 2. Handling of multiple PUCCHs overlapping in the time domain, or PUCCH and PUSCH overlapping in the time domain:

In a multi-TRPs scenario, to remove restrictions on system scheduling flexibility, it may be allowed to simultaneously transmit multiple PUCCHs associated with different spatial information or to simultaneously transmit PUCCH and PUSCH that are associated with different spatial information. FIG. 2A is a schematic diagram of simultaneous transmission of multiple PUCCHs. As shown in FIG. 2A, the terminal device simultaneously transmits PUCCHs to different TRPs through different panels/beams, where PUCCH#1 is associated with panel 1/beam 1, and PUCCH#1 is associated with panel 2/beam 2. FIG. 2B is a schematic diagram of simultaneous transmission of PUCCH and PUSCH. As shown in FIG. 2B, the terminal device simultaneously transmits PUCCH and PUSCH to different TRPs through different panels/beams, where PUCCH is associated with panel 1/beam 1, and PUSCH is associated with panel 2/beam 2.

Here, "simultaneous transmission" may refer to overlapping in the time domain or transmission within a first time unit; overlapping in the time domain may include completely overlapping or partially overlapping. For example, the terminal device transmitting PUCCH and PUSCH simultaneously may mean that the PUCCH and PUSCH transmitted by the terminal device completely overlap or partially overlap in the time domain, or that the terminal device transmits the PUCCH and PUSCH within a first time unit. The first time unit may be a predefined time period or a fixed-length time period.

FIG. 3 is a schematic flowchart of a communication method 300 according to an embodiment of the present application. The method may optionally be applied to the system shown in FIG. 1, FIG. 2A, or FIG. 2B, but is not limited thereto. The method includes at least part of the following content.

In S310, a terminal device determines a multiplexing manner according to at least one of: configuration information of a first higher-layer parameter or configuration information of a first transmission manner.

In S320, the terminal device transmits UCI carried by one or more PUCCHs according to the multiplexing manner.

The multiplexing manner may include: whether to use PUSCH to transmit the UCI carried by one or more PUCCHs, which PUSCH or PUSCHs to use to transmit UCI carried by a given PUCCH or PUCCHs, and how to handle the PUCCH whose UCI is not transmitted by the PUSCH. Accordingly, the terminal device may transmit the UCI carried by one or more PUCCHs according to the multiplexing manner. When the UCI carried by one or more PUCCHs is transmitted by the PUSCH, the one or more PUCCHs may not be transmitted.

The communication method proposed in the embodiments of the present application determines a multiplexing manner according to the configuration information of the first higher-layer parameter and the configuration information of the first transmission manner, and transmits the UCI carried by one or more PUCCHs according to the multiplexing manner, thereby solving the multiplexing problem of UCI in a case where multiple PUCCHs are transmitted simultaneously or in a case where PUCCH and PUSCH are transmitted simultaneously. The terminal device may determine the corresponding multiplexing manner according to the configuration information of the first higher-layer parameter and/or the configuration information of the first transmission manner. For example, the multiplexing manner may be any one of a first manner, a second manner, a third manner, a fourth manner, a fifth manner, or a sixth manner, which are described in detail below.

In some implementations, the configuration information of the first transmission manner may include:
the terminal device being configured with the first transmission manner; or,
the terminal device being not configured with the first transmission manner.

The first transmission manner may include: PUCCH and PUSCH that are associated with different spatial information being capable of simultaneous transmission.

In some implementations, the configuration information of the first higher-layer parameter includes a first value or a second value.

In one example, the first higher-layer parameter includes: a hybrid automatic repeat request (HARQ) feedback mode configuration (ackNackFeedbackMode). The configuration information of the HARQ feedback mode configuration may include: separate feedback or joint feedback, where separate feedback may be the first value, and joint feedback may be the second value.

In some implementations, the terminal device determines that one or more PUCCHs overlap with one or more PUSCHs in a time domain, or one or more PUCCHs overlap with one or more PUSCHs are transmitted within a first time unit,
where the one or more PUCCHs include one or more PUCCHs transmitted based on the same or different spatial information; and
the one or more PUSCHs include one or more PUSCHs transmitted based on the same or different spatial information.

In some implementations, the multiple PUCCHs include one or more of the following:
multiple PUCCHs scheduled by single DCI and transmitted in a single frequency network (SFN) manner;
multiple PUCCHs scheduled by single DCI and transmitted in a space division multiplexing (SDM) manner; or
multiple PUCCHs scheduled by multiple DCI.

Additionally, in some implementations, the multiple PUCCHs may include: multiple PUCCHs associated with different spatial information or multiple PUCCHs associated with the same spatial information.

In some implementations, the multiple PUSCHs include one or more of the following:
multiple PUSCHs scheduled by multiple DCI;
one or more PUSCHs scheduled by single DCI; or
one or more configured grant PUSCHs.

Specifically, among multiple PUSCHs determined by the terminal device to be transmitted, multiple PUSCHs scheduled by DCI may be included, or multiple configured grant PUSCHs may be included, or at least one PUSCH scheduled by DCI and at least one Configured grant PUSCH may be included. When the terminal device determines that there are multiple PUSCHs scheduled by DCI among multiple PUSCHs determined by the terminal device to be transmitted, the multiple PUSCHs may be scheduled by single DCI (i.e., the multiple PUSCHs are scheduled by the same DCI) or may be scheduled by multiple DCI (i.e., the multiple PUSCHs are scheduled by multiple different DCI).

The one or more configured grant PUSCHs may be Type 1 configured grant PUSCHs and/or Type 2 configured grant PUSCHs. The time domain resources, frequency domain resources, spatial information of Type 1 configured grant PUSCHs may be configured via RRC signaling and triggered for transmission via DCI signaling. The time domain resources, frequency domain resources, and spatial information of Type 2 configured grant PUSCH may be configured via RRC signaling.

Additionally, in some implementations, the multiple PUSCHs may include: multiple PUSCHs associated with different spatial information, or multiple PUSCHs associated with the same spatial information.

In a case where a terminal device determines that one or more PUCCHs overlap with one or more PUSCHs in a time domain, or that one or more PUCCHs and one or more PUSCHs are transmitted within a first time unit, the terminal device may determine the multiplexing manner of the UCI carried by the one or more PUCCHs according to at least one of: the configuration information of the first higher-layer parameter or the configuration information of the first transmission manner, and perform transmission according to the multiplexing manner.

Specifically, the above scenario may be further divided into the following three cases.

Case 1: the terminal device determines that one PUCCH overlaps with multiple PUSCHs in the time domain, or one PUCCH and multiple PUSCHs are transmitted within the first time unit.

Case 2: the terminal device determines that multiple PUCCHs overlap with one PUSCH in the time domain, or multiple PUCCHs and one PUSCH are transmitted within the first time unit.

Case 3: the terminal device determines that multiple PUCCHs overlap with multiple PUSCHs in the time domain, or multiple PUCCHs and multiple PUSCHs are transmitted within the first time unit.

In the above three cases, the manner for the terminal device to determine the multiplexing manner of the UCI carried by the PUCCH is as follows.
(I) Case 1: the terminal device determines that one PUCCH overlaps with multiple PUSCHs in the time domain, or that one PUCCH and multiple PUSCHs are transmitted within the first time unit. Here, overlapping in the time domain may include completely overlapping or partially overlapping.
   (1) Under Case 1, the terminal device determines the multiplexing manner according to at least one of: the configuration information of the first higher-layer parameter or the configuration information of the first transmission manner, which may include:
      in a case where the terminal device is configured with the first transmission manner, and the terminal device is configured with a PUSCH transmission scheduled by multiple DCI (*enableSTx2PofmDCI* is configured), determining that the multiplexing manner is: multiplexing UCI carried by the PUCCH into the first PUSCH,
      where spatial information associated with the PUCCH is the same as spatial information associated with the first PUSCH, and the multiple PUSCHs include the first PUSCH.

The above multiplexing manner may be referred to as a first manner.

According to the first manner, the terminal device may transmit the multiple PUSCHs, where a first PUSCH among the multiple PUSCHs transmits UCI carried by the PUCCH, and the PUCCH is not transmitted.

For example, in a case where the terminal device determines to transmit PUCCH#1, PUSCH#1, PUSCH#2, and PUSCH#3, and spatial information associated with PUCCH#1 is the same as spatial information associated with PUSCH#1, if the terminal device determines that the corresponding multiplexing manner is the first manner according to the configuration information of the first transmission manner, the terminal device transmits PUSCH#1, PUSCH#2, and PUSCH#3, where PUSCH#1 transmits UCI carried by PUCCH#1, and the terminal device does not transmit PUCCH#1.

In the first manner, the spatial information may include one or more of the following:
a joint TCI state;
an uplink (UL) TCI state;
a control resource set group index;
a sounding reference signal (SRS) resource set;
a reference signal corresponding to spatial relation;
a reference signal corresponding to a Quasi-co-located (QCL) of a type D;
an antenna panel identifier;
a TRP index; or
a beam index.

In the first manner, the terminal device may simultaneously transmit PUCCH and PUSCH that are associated with different spatial information. Without considering the configuration status of the first higher-layer parameter, the UCI is multiplexed directly according to the first manner, which simplifies UCI multiplexing. Moreover, since UCI multiplexing is performed according to spatial information without discarding UCI, it ensures the complete transmission of all information.

(2) Under Case 1, the terminal device determines the multiplexing manner according to at least one of: the configuration information of the first higher-layer parameter or the configuration information of the first transmission manner, which may include:
in a case where the terminal device is not configured with the first transmission manner, and the terminal device is configured with a PUSCH transmission scheduled by multiple DCI (*enableSTx2PofmDCI* is configured), determining that the multiplexing manner is:
if the configuration information of the first higher-layer parameter is a first value, multiplexing UCI carried by the one PUCCH into a first PUSCH, where spatial information associated with the PUCCH is the same as spatial information associated with the first PUSCH, and the multiple PUSCHs include the first PUSCH; and
if the configuration information of the first higher-layer parameter is a second value, multiplexing UCI carried by PUCCH into a second PUSCH.

In one example, the spatial information may include one or more of the following:
a joint TCI state;
an UL TCI state;
a control resource set group index;
an SRS resource set;
a reference signal corresponding to spatial relation;
a reference signal corresponding to a QCL of a type D;
an antenna panel identifier;
a TRP index; or
a beam index.

In one example, the second PUSCH may include one or more of the following:
a PUSCH among the multiple PUSCHs and associated with a first joint TCI state or an UL TCI state;
a PUSCH among the multiple PUSCHs and associated with a smallest antenna panel identifier or a smallest transmission reception point (TRP) index; for example, a PUSCH with an antenna panel or TRP index of 0;
a PUSCH among the multiple PUSCHs and associated with a smallest sounding reference signal (SRS) resource set index; for example, a PUSCH with an SRS resource set index of 0;
a PUSCH among the multiple PUSCHs and associated with a smallest reference signal resource index or a smallest reference signal resource set index; for example, a PUSCH with a reference signal resource index or reference signal resource set index of 0;
a PUSCH among the multiple PUSCHs and associated with a smallest control resource set (CORESET) group index; for example, a PUSCH with a CORESET group index of 0;
an earliest PUSCH that starts transmission among the multiple PUSCHs;
an earliest scheduled PUSCH among the multiple PUSCHs; or
a PUSCH among the multiple PUSCHs that has a highest modulation and coding scheme (MCS) level.

The above multiplexing manner may be referred to as a second manner.

According to the second manner, the terminal device may transmit the multiple PUSCHs, a first PUSCH or a second PUSCH among the multiple PUSCHs transmits UCI carried by the PUCCH, and the PUCCH is not transmitted.

In the second manner, in a case where the terminal device is not configured with the first transmission manner, if the backhaul between multi-TRPs is non-ideal, UCI multiplexing may be simplified directly according to the second manner. Moreover, UCI multiplexing is performed according to spatial information, which may ensure the complete transmission of all information. In a case where the terminal device is not configured with the first transmission manner, if the backhaul between multi-TRPs is ideal, it only needs to be multiplexed into one target PUSCH, making the implementation simpler. Using the PUSCH with the highest MCS level as a second PUSCH to carry UCI provides higher reliability, while using the earliest scheduled PUSCH among multiple PUSCHs as the second PUSCH enables earlier UCI transmission, reducing transmission delay.

(II) Case 2: the terminal device determines that multiple PUCCHs overlap with one PUSCH in the time domain, or that multiple PUCCHs and one PUSCH are transmitted within the first time unit. Here, overlapping in the time domain may include completely overlapping or partially overlapping.
(1) Under Case 2, the terminal device determines the multiplexing manner according to at least one of: the configuration information of the first higher-layer parameter or the configuration information of the first transmission manner, which may include:
   in a case where the terminal device is configured with the first transmission manner, determining that the multiplexing manner is: multiplexing UCI carried by a first PUCCH into the PUSCH;
   where spatial information associated with the first PUCCH is the same as spatial information associated with the PUSCH, and the multiple PUCCHs include the first PUCCH.

The above multiplexing manner may be referred to as a third manner.

The terminal device may transmit the PUSCH according to the third manner, where the PUSCH transmits UCI carried by the first PUCCH, and the terminal device also transmits other PUCCHs excluding the first PUCCH.

For example, in a case where the terminal device determines to transmit PUCCH#1, PUCCH#2, PUCCH#3, and PUSCH#1, and the spatial information associated with PUCCH#1 is the same as that associated with PUSCH#1, and if the terminal device determines that the corresponding multiplexing manner is the third manner according to the configuration information of the first transmission manner, the terminal device transmits PUSCH#1, PUCCH#2, and PUCCH#3. Here, PUSCH#1 transmits UCI carried by PUCCH#1, and the terminal device does not transmit PUCCH#1.

In the first manner, the spatial information may include one or more of the following:
a joint TCI state;
an UL TCI state;
a control resource set group index;
an SRS resource set;
a reference signal corresponding to spatial relation;
a reference signal corresponding to a QCL of a type D;
an antenna panel identifier;
a TRP index; or
a beam index.

(2) Under Case 2, the terminal device determines the multiplexing manner according to at least one of: the configuration information of the first higher-layer parameter or the configuration information of the first transmission manner, which may include:
in a case where the terminal device is not configured with the first transmission manner, if the configuration information of the first higher-layer parameter is a first value, there are at least three possibilities:

First possibility: the terminal device does not expect this case, and therefore the terminal device may consider the case is an error case.

Second possibility: the terminal device determines that the multiplexing manner is: multiplexing the UCI carried by the first PUCCH into the PUSCH, and not transmitting other PUCCHs among the multiple PUCCHs excluding the first PUCCH,
where spatial information associated with the first PUCCH is the same as spatial information associated with the PUSCH, and the multiple PUCCHs include the first PUCCH.

Third possibility: in a case where a priority corresponding to priority indexes of the multiple PUCCHs is higher than a priority corresponding to a priority index of the PUSCH, determining to transmit the multiple PUCCHs and not transmit the PUSCH; and in a case where the priority corresponding to the priority indexes of the multiple PUCCHs is lower than or equal to the priority corresponding to the priority index of the PUSCH, multiplexing UCI carried by a first PUCCH into the PUSCH and not transmitting other PUCCHs among the multiple PUCCHs excluding the first PUCCH, where spatial information associated with the first PUCCH is the same as spatial information associated with the PUSCH, and the multiple PUCCHs include the first PUCCH.

In a case where the terminal device is not configured with the first transmission manner, if the configuration information of the first higher-layer parameter is a second value, multiplexing UCI carried by the multiple PUCCHs into the PUSCH.

The above multiplexing manner can be referred to as a fourth manner.

In the fourth manner, the terminal device may determine the multiplexing manner according to physical channel priority, thereby ensuring the transmission of high-priority channels and, to some extent, guaranteeing the integrity of information transmission.

(III) Case 3: the terminal device determines that multiple PUCCHs overlap with multiple PUSCHs in the time domain, or multiple PUCCHs and multiple PUSCHs are transmitted within the first time unit. Here, overlapping in the time domain may include completely overlapping or partially overlapping.

Under Case 3, the multiplexing manner is related to the configuration information of the first higher-layer parameter and is unrelated to the configuration information of the first transmission manner. An example is as follows:
(1) under Case 3, in a case where the configuration information of the first higher-layer parameter is a first value, determining that the multiplexing manner is: respectively multiplexing UCI carried by one or more of the multiple PUCCHs into a first PUSCH corresponding to the PUCCH,
   where spatial information associated with the PUCCH is the same as spatial information associated with the first PUSCH corresponding to the PUCCH, and the multiple PUSCHs include the first PUSCH.

In one example, the spatial information may include one or more of the following:
a joint TCI state;
an UL TCI state;
a control resource set group index;
an SRS resource set;
a reference signal corresponding to spatial relation;
a reference signal corresponding to a QCL of a type D;
an antenna panel identifier;
a TRP index; or
a beam index.

The above method may be referred to as a fifth manner.

According to the fifth manner, the terminal device uses a PUSCH to transmit the UCI carried by the PUCCH corresponding to the PUSCH, and does not transmit the PUCCH corresponding to the PUSCH.

For example, in a case where the terminal device determines to simultaneously transmit PUCCH#1, PUCCH#2, PUSCH#1, and PUSCH#2, and spatial information associated with PUCCH#1 is the same as spatial information associated with PUSCH#1, and spatial information associated with PUCCH#2 is the same as spatial information associated with PUSCH#2-that is, the first PUSCH corresponding to PUCCH#1 is PUSCH#1, and the first PUSCH corresponding to PUCCH#2 is PUSCH#2-if the configuration information of the first higher-layer parameter is a first value, the terminal device determines that the multiplexing manner is: multiplexing the UCI carried by PUCCH#1 into the corresponding PUSCH#1, and multiplexing the UCI carried by PUCCH#2 into the corresponding PUSCH#2. According to this multiplexing manner, the terminal device transmits only PUSCH#1 and PUSCH#2, and does not transmit PUCCH#1 and PUCCH#2.

The above manner may be referred to as a fifth manner.

According to the fifth manner, the terminal device uses a PUSCH to transmit the UCI carried by the PUCCH corresponding to the PUSCH, and does not transmit the PUCCH corresponding to the PUSCH. By using the fifth manner, the terminal device may perform UCI multiplexing according to spatial information, ensuring the complete transmission of all information.

(2) Under Case 3, in a case where the configuration information of the first higher-layer parameter is a second value, the terminal device determines the multiplexing manner is: multiplexing UCI carried by one or more of multiple PUCCHs into a second PUSCH. For example, multiplexing the UCI carried by all PUCCHs among the multiple PUCCHs into the second PUSCH,
where the second PUSCH may include one or more of the following:
a PUSCH among the multiple PUSCHs and associated with a first joint TCI state or an UL TCI state;
a PUSCH among the multiple PUSCHs and associated with a smallest antenna panel identifier or a smallest TRP index; for example, a PUSCH with an antenna panel or TRP index of 0;
a PUSCH among the multiple PUSCHs and associated with a smallest SRS resource set index; for example, a PUSCH with an SRS resource set index of 0;
a PUSCH among the multiple PUSCHs and associated with a smallest reference signal resource index or a smallest reference signal resource set index; for example, a PUSCH with a reference signal resource index or reference signal resource set index of 0;
a PUSCH among the multiple PUSCHs and associated with a smallest CORESET group index; for example, a PUSCH with a CORESET group index of 0;
an earliest PUSCH that starts transmission among the multiple PUSCHs;
an earliest scheduled PUSCH among the multiple PUSCHs; or
a PUSCH among the multiple PUSCHs that has a highest MCS level.

The above multiplexing manner may be referred to as a sixth manner.

According to the sixth manner, the terminal device may use one PUSCH (i.e., the second PUSCH) to transmit UCI carried by multiple PUCCHs, and the terminal device does not transmit these multiple PUCCHs. Using the sixth manner, the terminal device only needs to multiplex UCI carried by all PUCCHs into one target PUSCH (i.e., the second PUCCH), making the implementation simpler. The PUSCH with the highest MCS level, which serves as the target PUSCH for carrying UCI, provides higher reliability. The earliest scheduled PUSCH among multiple PUSCHs, serving as the target PUSCH, enables UCI to be transmitted as early as possible, reducing transmission delay.

Additionally, in some implementations, for the above three cases, the terminal device may transmit a first capability of the terminal device to the network device before determining the multiplexing manner. The first capability is used to indicate that the terminal device supports simultaneous transmission of PUCCH and PUSCH that are associated with different spatial information. The network device may include one or more of: a base station, TRP, or an access point (AP), etc.

Furthermore, the terminal device may receive configuration information of the first transmission manner transmitted by the network device. When configuring the first transmission manner for the terminal device, the network device may perform configuration according to whether the terminal device has the first capability. For example, if the terminal device has the first capability, that is, the terminal device supports simultaneous transmission of PUCCH and PUSCH that are associated with different spatial information, the network device may configure the first transmission manner for the terminal device, or not configure the first transmission manner for the terminal device. If the terminal device does not have the first capability, that is, the terminal device does not support simultaneous transmission of PUCCH and PUSCH that are associated with different spatial information, the network device may not configure the first transmission manner for the terminal device.

The network device may use a higher-layer parameter or a media access control control element (MAC CE) to transmit configuration information of the first transmission manner to the terminal device. In one example, the terminal device receiving configuration information of the first transmission manner transmitted by the network device includes:
the terminal device receiving a second higher-layer parameter or an MAC CE transmitted by the network device, where the second higher-layer parameter or the MAC CE carries the configuration information of the first transmission manner.

For example, the second higher-layer parameter includes one or more of the following:
a PUCCH configuration;
a PUCCH resource;
a PUCCH resource group;
a TCI state;
a TCI uplink state; or
a PUSCH configuration.

Additionally, in some implementations, for the above three cases, before determining the multiplexing manner, the terminal device may transmit a second capability of the terminal device to the network device. The second capability is used to indicate that the terminal device supports simultaneous transmission of multiple PUCCHs associated with different spatial information.

Furthermore, the terminal device may receive configuration information of a second transmission manner transmitted by the network device. The configuration information indicates that the terminal device is configured with the second transmission manner, or the configuration information indicates that the terminal device is not configured with the second transmission manner. In one example, the second transmission manner includes: multiple PUCCHs associated with different spatial information being capable of simultaneous transmission.

For example, if the terminal device has the second capability, that is, the terminal device supports simultaneous transmission of multiple PUCCHs associated with different spatial information, and the terminal device has reported the second capability to the network device, the network device may configure the second transmission manner for the terminal device, or not configure the second transmission manner for the terminal device. If the terminal device does not have the second capability, that is, the terminal device does not support simultaneous transmission of multiple PUCCHs associated with different spatial information, the network device may not configure the second transmission manner for the terminal device.

For example, in the third manner described above, if the terminal device is pre-configured by the network device with the second transmission manner, the terminal device may determine that the multiplexing manner is the third manner. That is, multiplexing, into the PUSCH, the UCI carried by the PUCCH associated with the same spatial information as the PUSCH among the multiple PUCCHs, while leaving the PUCCHs associated with different spatial information from the PUSCH among the multiple PUCCHs unprocessed.

The network device may use a higher-layer parameter or an MAC CE to transmit configuration information of the second transmission manner to the terminal device. In one example, the terminal device receiving the configuration information of the second transmission manner transmitted by the network device includes:
the terminal device receiving a third higher-layer parameter or an MAC CE transmitted by the network device, where the third higher-layer parameter or the MAC CE carries the configuration information of the second transmission manner.

For example, the third higher-layer parameter includes one or more of the following:
a PUCCH configuration;
a PUCCH resource;
a PUCCH resource group;
a TCI state; or
a TCI uplink state.

The embodiments of the present application also propose a communication method applied to a network device, which may configure different first higher-layer parameters and first transmission manners for the terminal device, and receive UCI transmitted by the terminal device according to the multiplexing manner corresponding to the first higher-layer parameter and the first transmission manner. FIG. 4 is a schematic flowchart of a communication method 400 according to an embodiment of the present application. The method may optionally be applied to the system shown in FIG. 1, FIG. 2A, or FIG. 2B, but is not limited thereto. The method includes at least part of the following content.

In S410, a network device configures for the terminal device at least one of: a first higher-layer parameter or a first transmission manner; and
in S420, the network device receives UCI carried by one or more PUCCHs transmitted by the terminal device according to the multiplexing manner corresponding to at least one of: the first higher-layer parameter or the first transmission manner.

Here, the network device may include a base station, a TRP, or an access point, etc.

In some implementations, the network device configuring the first transmission manner includes:
the network device configuring the terminal device with the first transmission manner; or,
the network device not configuring the terminal device with the first transmission manner.

In some implementations, the first transmission manner includes: PUCCH and PUSCH that are associated with different spatial information being capable of simultaneous transmission.

In some implementations, the configuration information of the first higher-layer parameter includes a first value or a second value.

In one example, the first higher-layer parameter includes: an HARQ feedback mode configuration (ackNackFeedbackMode); the configuration information of the HARQ feedback mode configuration may include: separate feedback or joint feedback, where the separate feedback may be the first value, and the joint feedback may be the second value. The first higher-layer parameter includes: an HARQ feedback mode configuration.

In some implementations, the multiplexing manner corresponding to at least one of the first higher-layer parameter or the first transmission manner includes:
when one PUCCH of the terminal device overlaps with multiple PUSCHs of the terminal device in a time domain, or one PUCCH of the terminal device and multiple PUSCHs of the terminal device are transmitted within a first time unit, in a case where the network device configures the terminal device with the first transmission manner, and the terminal device is configured with a PUSCH transmission scheduled by multiple DCI, determining that the multiplexing manner is: multiplexing UCI carried by the one PUCCH into a first PUSCH,
where spatial information associated with the PUCCH is the same as spatial information associated with the first PUSCH, and the multiple PUSCHs include the first PUSCH.

In some implementations, the multiplexing manner corresponding to at least one of: the first higher-layer parameter or the first transmission manner includes:
when one PUCCH of the terminal device overlaps with multiple PUSCHs of the terminal device in a time domain, or one PUCCH of the terminal device and multiple PUSCHs of the terminal device are transmitted within a first time unit, in a case where the network device configures the terminal device with the first transmission manner, and the terminal device is configured with a PUSCH transmission scheduled by multiple DCI, determining that the multiplexing manner is:
if the configuration information of the first higher-layer parameter is a first value, multiplexing UCI carried by the PUCCH into a first PUSCH; where spatial information associated with the PUCCH is the same as spatial information associated with the first PUSCH, and the multiple PUSCHs include the first PUSCH; and
if the configuration information of the first higher-layer parameter is a second value, multiplexing UCI carried by the PUCCH into a second PUSCH.

Here, the second PUSCH may include one or more of the following:
a PUSCH among the multiple PUSCHs and associated with a first joint TCI state or an UL TCI state;
a PUSCH among the multiple PUSCHs and associated with a smallest antenna panel identifier or a smallest TRP index; for example, a PUSCH with an antenna panel or TRP index of 0;
a PUSCH among the multiple PUSCHs and associated with a smallest SRS resource set index; for example, a PUSCH with an SRS resource set index of 0;
a PUSCH among the multiple PUSCHs and associated with a smallest reference signal resource index or a smallest reference signal resource set index; for example, a PUSCH with a reference signal resource index or reference signal resource set index of 0;
a PUSCH among the multiple PUSCHs and associated with a smallest CORESET group index; for example, a PUSCH with a CORESET group index of 0;
an earliest PUSCH that starts transmission among the multiple PUSCHs;
an earliest scheduled PUSCH among the multiple PUSCHs; or
a PUSCH among the multiple PUSCHs that has a highest MCS level.

In some implementations, the multiplexing manner corresponding to at least one of: the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device configures the terminal device with the first transmission manner, the multiplexing manner is: multiplexing UCI carried by a first PUCCH into the PUSCH,
where spatial information associated with the first PUCCH is the same as spatial information associated with the PUSCH, and the multiple PUCCHs include the first PUCCH.

In some implementations, the multiplexing manner corresponding to at least one of: the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a first value, multiplexing UCI carried by a first PUCCH into the PUSCH and not transmitting other PUCCHs among the multiple PUCCHs excluding the first PUCCH,
where spatial information associated with the first PUCCH is the same as spatial information associated with the PUSCH, and the multiple PUCCHs include the first PUCCH.

In some implementations, the multiplexing manner corresponding to at least one of: the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a first value, then:
in a case where a priority corresponding to priority indexes of the multiple PUCCHs is higher than a priority corresponding to a priority index of the PUSCH, determining to transmit the multiple PUCCHs and not transmit the PUSCH; and
in a case where the priority corresponding to the priority indexes of the multiple PUCCHs is lower than or equal to the priority corresponding to the priority index of the PUSCH, multiplexing UCI carried by a first PUCCH into the PUSCH and not transmitting other PUCCHs among the multiple PUCCHs excluding the first PUCCH, where spatial information associated with the first PUCCH is the same as spatial information associated with the PUSCH, and the multiple PUCCHs include the first PUCCH.

In some implementations, the multiplexing manner corresponding to at least one of the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device dose not configure the terminal device with the first transmission manner, the multiplexing manner is:
if the configuration information of the first higher-layer parameter is a second value, multiplexing UCI carried by the multiple PUCCHs into the PUSCH.

In some implementations, before the network device configuring the first transmission manner, the method further includes:
the network device receiving the first capability transmitted by the terminal device, where the first capability is used to indicate that the terminal device supports simultaneous transmission of PUCCH and PUSCH that are associated with different spatial information.

In some implementations, the network device configuring the first transmission manner includes:
the network device transmitting the configuration information of the first transmission manner to the terminal device.

In some implementations, the network device transmitting the configuration information of the first transmission manner to the terminal device includes:
the network device transmitting a second higher-layer parameter or an MAC CE to the terminal device, where the second higher-layer parameter or the MAC CE carries the configuration information of the first transmission manner.

Here, the second higher-layer parameter may include one or more of the following:
a PUCCH configuration;
a PUCCH resource;
a PUCCH resource group;
a TCI state;
a TCI uplink state; or
a PUSCH configuration.

In some implementations, the method further includes: the network device receiving a second capability from the terminal device, where the second capability is used to indicate that the terminal device supports simultaneous transmission of multiple PUCCHs associated with different spatial information.

In some implementations, the network device transmits the configuration information of the second transmission manner to the terminal device, where the configuration information of the second transmission manner indicates the terminal device is configured with the second transmission manner or the terminal device is not configured with the second transmission manner.

In some implementations, the second transmission manner includes: multiple PUCCHs associated with different spatial information being capable of simultaneous transmission.

In some implementations, the network device transmitting configuration information of the second transmission manner to the terminal device includes:
the network device transmitting a third higher-layer parameter or an MAC CE to the terminal device, where the third higher-layer parameter or the MAC CE carries the configuration information of the second transmission manner.

Here, the third higher-layer parameter may include one or more of the following:
a PUCCH configuration;
a PUCCH resource;
a PUCCH resource group;
a TCI state; or
a TCI uplink state.

In some implementations, the multiplexing manner corresponding to at least one of: the first higher-layer parameter or the first transmission manner includes:
when multiple PUCCHs of the terminal device overlap with multiple PUSCHs of the terminal device in a time domain, or multiple PUCCHs of the terminal device and multiple PUSCHs of the terminal device are transmitted within a first time unit, and in a case where the configuration information of the first higher-layer parameter is a first value, the multiplexing manner is: respectively multiplexing UCI carried by one or more of the multiple PUCCHs into a first PUSCH corresponding to the PUCCH,
where spatial information associated with the PUCCH is the same as spatial information associated with the first PUSCH corresponding to the PUCCH, and the multiple PUSCHs include the first PUSCH.

In some implementations, the multiplexing manner corresponding to at least one of: the first higher-layer parameter or the first transmission manner includes:
when multiple PUCCHs of the terminal device overlap with multiple PUSCHs of the terminal device in a time domain, or multiple PUCCHs of the terminal device and multiple PUSCHs of the terminal device are transmitted within a first time unit, in a case where the configuration information of the first higher-layer parameter is a second value, the multiplexing manner is: multiplexing UCI carried by one or more of the multiple PUCCHs into a second PUSCH.

Here, the second PUSCH may include one or more of the following:
a PUSCH among the multiple PUSCHs and associated with a first joint TCI state or an UL TCI state;
a PUSCH among the multiple PUSCHs and associated with a smallest antenna panel identifier or a smallest TRP index;
a PUSCH among the multiple PUSCHs and associated with a smallest SRS resource set index;
a PUSCH among the multiple PUSCHs and associated with a smallest reference signal resource index or a smallest reference signal resource set index;
a PUSCH among the multiple PUSCHs and associated with a smallest CORESET group index;
an earliest PUSCH that starts transmission among the multiple PUSCHs;
an earliest scheduled PUSCH among the multiple PUSCHs; or
a PUSCH among the multiple PUSCHs that has a highest MCS level.

In some implementations, the multiple PUSCHs include one or more of the following:
multiple PUSCHs scheduled by multiple DCI;
one or more PUSCHs scheduled by single DCI; or
one or more configured grant PUSCHs.

In some implementations, the multiple PUSCHs include: multiple PUSCHs associated with different spatial information, or multiple PUSCHs associated with the same spatial information.

In some implementations, the multiple PUCCHs include one or more of the following:
multiple PUCCHs scheduled by single DCI and transmitted in an SFN manner;
multiple PUCCHs scheduled by single DCI and transmitted in an SDM manner; or
multiple PUCCHs scheduled by multiple DCI.

In some implementations, the multiple PUCCHs include: multiple PUCCHs associated with different spatial information, or multiple PUCCHs associated with the same spatial information.

In some implementations, the spatial information includes one or more of the following:
a joint TCI state;
an UL TCI state;
a control resource set group index;
an SRS resource set;
a reference signal corresponding to spatial relation;
a reference signal corresponding to a QCL of a type D;
an antenna panel identifier;
a TRP index; or
a beam index.

The network device in the embodiments of the present application may be devices such as a base station, TRP, or an access point, etc.

For specific examples of the network device performing the method 400 in this embodiment, please refer to the related descriptions of the network device in the method 300 above, which will not be repeated here for the sake of brevity.

The embodiments of the present application are described in detail below with reference to the accompanying drawings.

In the embodiments of the present application, a terminal device determines that one or more PUCCHs overlap with one or more PUSCHs in a time domain, or one or more PUCCHs and one or more PUSCHs are transmitted within a first time unit,
where the one or more PUCCHs include one or more PUCCHs transmitted based on the same or different spatial information, and
the one or more PUSCHs include one or more PUSCHs transmitted based on the same or different spatial information.

Here, overlapping in the time domain may include completely overlapping or partially overlapping in the time domain.

In the aforementioned case, the terminal device determines the multiplexing manner of UCI carried by one or more PUCCHs according to at least one of: the configuration information of the first higher-layer parameter or the configuration information of the first transmission manner. The multiplexing manner may be referred to as a target manner, and the terminal device transmits the UCI carried by one or more PUCCHs according to the target manner.

For different scenarios involving PUCCH and PUSCH, specific descriptions are provided in Embodiments 1 to 3. In the following embodiments, the terminal device is specifically a UE. The network device may include devices such as a base station, a TRP, or an access point, etc.

Embodiment 1:
a case where one PUCCH overlaps with multiple PUSCHs in a time domain, or one PUCCH and multiple PUSCHs are transmitted within a first time unit includes: a PUCCH associated with one spatial information overlapping with multiple simultaneously transmitted PUSCHs associated with multiple different spatial information in the time domain, or a PUCCH associated with one spatial information and multiple simultaneously transmitted PUSCHs associated with multiple different spatial information being transmitted within the first time unit. Here, overlapping in the time domain can be understood as completely overlapping or partially overlapping in the time domain.

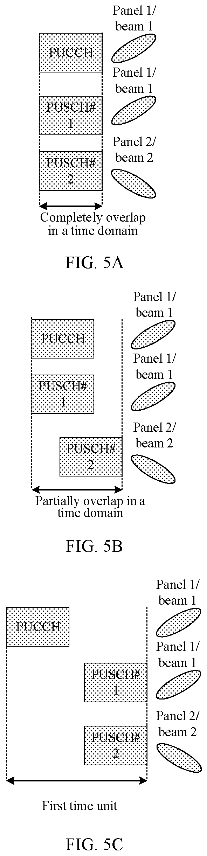

FIG. 5A is a schematic diagram of one PUCCH completely overlapping with multiple PUSCHs in a time domain, FIG. 5B is a schematic diagram of one PUCCH partially overlapping with multiple PUSCHs in a time domain, and FIG. 5C is a schematic diagram of one PUCCH and multiple PUSCHs being transmitted within a first time unit.

Here, the multiple PUSCHs include multiple PUSCHs simultaneously transmitted based on different spatial information.

These multiple PUSCHs may be PUSCHs scheduled by different downlink control information (DCI), or PUSCHs scheduled by one DCI, or configured grant PUSCHs.

That is, the multiple PUSCHs may all be PUSCHs scheduled by DCI, or all be configured grant PUSCHs, or some may be PUSCHs scheduled by DCI and others may be configured grant PUSCHs. For multiple PUSCHs scheduled by DCI, they may be scheduled by different DCI or by single DCI.

The UE determines the multiplexing manner of UCI as a target manner. The target method may be a first manner or a second manner.

The first manner: in a case where the UE is configured with the first transmission manner and the UE is configured with a PUSCH transmission scheduled by multiple DCI (*enableSTx2PofmDCI* is configured), the UE multiplexes UCI into the PUSCH with the same spatial information associated with the PUCCH.

Here, the first transmission manner is: PUCCH and PUSCH that are associated with different spatial information being capable of simultaneous transmission.

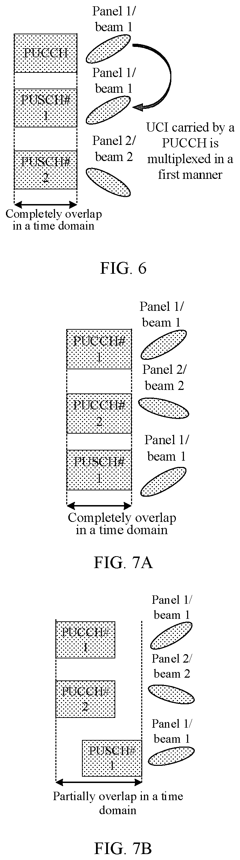

FIG. 6 is a schematic diagram of a first manner according to an embodiment of the present application. In FIG. 6, PUCCH, PUSCH#1, and PUSCH#2 are transmitted simultaneously, where spatial information associated with PUCCH is the same as spatial information associated with PUSCH#1. In a case where the UE is configured with the first transmission manner and the UE is configured with a PUSCH transmission scheduled by multiple DCI, the UE determines that the multiplexing manner is the first manner; according to the first manner, the UE transmits PUSCH#1 and PUSCH#2, the UE does not transmit PUCCH, and uses PUSCH#1 to transmit the UCI carried by PUCCH. FIG. 6 illustrates a case where PUCCH, PUSCH#1, and PUSCH#2 completely overlap in the time domain. For a case where PUCCH, PUSCH#1, and PUSCH#2 partially overlap in the time domain, or PUCCH, PUSCH#1, and PUSCH#2 are transmitted within the first time unit, the multiplexing manner is the same as shown in FIG. 6.

Here, the spatial information may include one or more of the following:
a joint TCI state;
an UL TCI state;
a control resource set group index (CoresetPoolIndex);
a sounding reference signal (SRS) resource set;
a reference signal corresponding to spatial relation, such as an SRS, a CSI-RS, a DMRS, an SSB, etc;
a reference signal corresponding to a QCL of a type D;
an antenna panel identifier;
a TRP index; or
a beam index.

In this example, in a case where the first transmission manner is configured, the UE does not need to consider the configuration status of the first higher-layer parameter and directly multiplexes the UCI carried by PUCCH according to the first manner.

Before the UE is configured with the first transmission manner, the method may further include: the UE reporting a first capability, the first capability may also be referred to as a first UE capability.

The first UE capability is used to indicate that the UE supports simultaneous transmission of PUCCH and PUSCH that are associated with different spatial information, which includes at least the following three cases:
(1) the first UE capability is applicable to a scenario where both PUCCH and PUSCH are scheduled by multiple DCI; or
(2) the first UE capability is applicable to a scenario where the PUCCH is a PUCCH scheduled by single DCI and transmitted by an SDM scheme, or the PUCCH is a PUCCH scheduled by single DCI and transmitted by an SFN scheme, and the PUSCH is multiple PUSCHs scheduled by multiple DCI; or
(3) the first UE capability is applicable to a scenario where the PUCCH is multiple PUCCHs scheduled by multiple DCI, and the PUSCH is a PUSCH scheduled by single DCI and transmitted by an SDM scheme, or a PUSCH is a PUSCH scheduled by single DCI and transmitted by an SFN scheme.

Using the first manner, in a case where the UE may simultaneously transmit PUCCHs associated with different spatial relations, the UE may directly multiplex the UCI carried by PUCCH according to the first manner without considering the configuration status of the first higher-layer parameter, thereby simplifying the UCI multiplexing manner. Moreover, multiplexing UCI based on spatial information ensures the complete transmission of all information.

The second method: in a case where the UE is not configured with the first transmission manner, and the UE is configured with a PUSCH transmission scheduled by multiple DCI (*enableSTx2PofmDCI* is configured):
the UE not being configured with the first transmission manner, which can be understood as the UE not supporting the first UE capability, or the UE supporting the first UE capability but the network device not configuring the first transmission manner.

If the first higher-layer parameter is configured with a first value, the UE multiplexes the UCI into the PUSCH associated with the same spatial information as the PUCCH.

The first higher-layer parameter is used by the UE to determine whether the backhaul between multi-TRPs is ideal or non-ideal backhaul. The first higher-layer parameter is the HARQ feedback mode configuration, that is, *ackNackFeedbackMode*. The first value is used to determine that the backhaul between multi-TRPs is non-ideal backhaul*.* This can be understood as the higher-layer parameter *ackNackFeedbackMode* being configured with the first value, i.e., separate.

The first higher-layer parameter is used by the UE to determine the UCI multiplexing manner, and the first value is used to determine the multiplexing manner is: the UE multiplexing the UCI into the PUSCH associated with the same spatial information as the PUCCH.

In this case, in a case where the UE is not configured with the first transmission manner, if the backhaul between multiple TRPs is non-ideal backhaul, directly multiplexing the UCI carried by PUCCH according to the second manner may simplify the UCI multiplexing process. Moreover, performing UCI multiplexing according to spatial information ensures the complete transmission of all information.

If the first higher-layer parameter is configured with the second value, the UE multiplexes the UCI into the target PUSCH.

The target PUSCH is a PUSCH associated with the first joint/UL TCI state; or
the target PUSCH is a PUSCH associated with a smaller antenna panel identifier or TRP index, for example, the antenna panel identifier or TRP index is 0; or
the target PUSCH is a PUSCH associated with a smaller SRS resource set index, for example, the SRS resource set index is 0; or
the target PUSCH is a PUSCH associated with a smaller reference signal resource index or reference signal resource set index, for example, the index or set index is 0; or
the target PUSCH is a PUSCH associated with a smaller CORESET group index, for example, the CORESET group index is 0; or
the target PUSCH is an earliest PUSCH that starts transmission among the multiple PUSCHs; or
the target PUSCH is an earliest scheduled PUSCH among the multiple PUSCHs; or
the target PUSCH is a PUSCH among the multiple PUSCHs that has a highest MCS level.

The first higher-layer parameter is used by the UE to determine that the backhaul between multi-TRPs is ideal or non-ideal. The first higher-layer parameter is the HARQ feedback mode configuration, that is, *ackNackFeedbackMode*. The second value is used to determine that the backhaul between multi-TRPs is ideal*.* It can be understood that the higher-layer parameter *ackNackFeedbackMode* is configured to the second value, i.e., joint.

The first higher-layer parameter is used by the UE to determine the UCI multiplexing manner, and the second value is used to determine the multiplexing manner is: the UE multiplexing UCI into the target PUSCH.

In this case, it only requires multiplexing into one target PUSCH, making the implementation simpler. If the PUSCH with the highest MCS level is selected as the target PUSCH, the reliability of carrying UCI is higher. If an earliest scheduled PUSCH among the multiple PUSCHs is selected as the target PUSCH, the UCI can be transmitted as early as possible, reducing the transmission delay of UCI.

Embodiment 2:
in a case where multiple PUCCHs overlap with one PUSCH in a time domain, or multiple PUCCHs and one PUSCH are transmitted within a first time unit, where the multiple PUCCHs are multiple PUCCHs scheduled by single DCI and transmitted in an SFN manner based on different spatial information, or the multiple PUCCHs are PUCCHs scheduled by multiple DCI and transmitted based on different spatial information, or the multiple PUCCHs are PUCCHs scheduled by single-DCI and transmitted in an SDM manner based on different spatial information. Among the multiple PUCCHs, the spatial information associated with a PUCCH is the same as the spatial information associated with the PUSCH. Among them, overlapping in the time domain can be understood as complete overlapping or partial overlapping in the time domain.

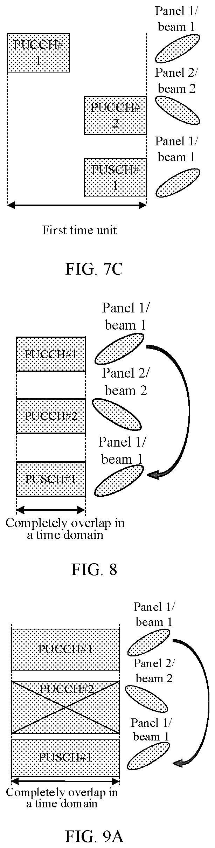

FIG. 7A is a schematic diagram of multiple PUCCHs completely overlapping with a PUSCH in a time domain, FIG. 7B is a schematic diagram of multiple PUCCHs partially overlapping with a PUSCH in a time domain, and FIG. 7C is a schematic diagram of multiple PUCCHs and a PUSCH being transmitted in a first time unit.

The PUCCH may be triggered by one or more PDCCHs, which may carry DCI format 1-1 or 1-2; or the PUCCH may be a PUCCH configured by RRC signaling.

The spatial information configuration associated with PUCCH resources corresponding to the multiple PUCCHs is configured with apply multiple spatial information.

The UCI carried by the PUCCH may include an HARQ, and/or CSI, and/or a selective repeat (SR).

The UE determines the multiplexing manner of UCI as the target manner. The target manner is a third manner or a fourth manner.

The third manner: in a case where the UE is configured with the first transmission manner, the UE multiplexes the UCI carried by a PUCCH with the same spatial information as the PUSCH among multiple PUCCHs into the PUSCH with the same spatial information, while the PUCCH with different spatial information from the PUSCH among the multiple PUCCHs are not processed.

FIG. 8 is a schematic diagram of a third manner according to an embodiment of the present application. In FIG. 8, PUCCH#1, PUCCH#2, and PUSCH#1 are transmitted simultaneously, where the spatial information associated with PUCCH#1 is the same as that associated with PUSCH#1. In a case where the UE is configured with the first transmission manner, the UE determines that the multiplexing manner is the third manner; according to the third manner, the UE transmits PUSCH#1 and PUCCH#2, the UE does not transmit PUCCH#1, and uses PUSCH#1 to transmit the UCI carried by PUCCH#1. That is, the UCI carried by PUCCH#1 is multiplexed into PUSCH#1, and the UE may simultaneously transmit PUCCH#2 and PUSCH#1 and not transmitting PUCCH#1. FIG. 8 illustrates the case where PUCCH#1, PUCCH#2, and PUSCH#1 completely overlap in the time domain. For cases where PUCCH#1, PUCCH#2, and PUSCH#1 partially overlap in the time domain, or PUCCH#1, PUCCH#2, and PUSCH#1 are transmitted within the first time unit, the multiplexing manner is the same as shown in FIG. 8.

Before the UE being configured with the first transmission manner, the method may further include: the UE reporting a first capability, the first capability may also be referred to as a first UE capability.

The first UE capability is used to indicate that the UE supports simultaneous transmission of PUCCH and PUSCH associated with different spatial information, which includes at least the following three cases:
(1) the first UE capability is applicable to scenarios where both PUCCH and PUSCH are scheduled by multiple DCI; or,
(2) the first UE capability is applicable to the PUCCH is a PUCCH scheduled by single DCI, a PUCCH transmitted by an SDM scheme, or a PUCCH transmitted by an SFN scheme, and the PUSCH are multiple PUSCHs scheduled by multiple DCI; or,
(3) the first UE capability is applicable to the PUCCH are multiple PUCCHs scheduled by multiple DCI, and the PUSCH is a PUSCH scheduled by single DCI, a PUSCH transmitted by an SDM scheme, or a PUSCH transmitted by an SFN scheme.

According to the first UE capability reported by the UE, the network device may configure the first transmission manner for the UE or may not configure the first transmission manner for the UE. For example, if the UE has the first UE capability, the network device may configure the first transmission manner for the UE, or may not configure the first transmission manner for the UE. If the UE does not have the first UE capability, the network device will not configure the first transmission manner for the UE.

Before the UE being configured with the first transmission manner, the method may further include: the UE being configured with a second transmission manner.

The second transmission manner is: multiple PUCCHs associated with different spatial information and scheduled by multiple DCI being capable of simultaneous transmission.

Before the UE being configured with the second transmission manner, the method further includes: the UE reporting a second capability, the second capability may also be referred to as a second UE capability, and the second UE capability is the UE supporting simultaneous transmission of multiple PUCCHs associated with different spatial information and scheduled by multiple DCI.

According to the second UE capability reported by the UE, the network device may configure the second transmission manner for the UE, or may not configure the second transmission manner for the UE. For example, if the UE has the second UE capability, the network device may configure the second transmission manner for the UE, or may not configure the second transmission manner for the UE. If the UE does not have the second UE capability, the network device will not configure the second transmission manner for the UE.

In the scenario of this embodiment, in a case where the UE supports the first capability, PUCCH/PUSCH associated with different coreset Pool Indexes are allowed to overlap in the time domain or be transmitted within the first time unit.

The fourth manner:
in a case where the UE is not configured with the first transmission scheme:
(1) if the first higher-layer parameter is configured with the first value, there are multiple possibilities as follows:
   a first possibility: the UE does not expect this case and may treat it as an error case;
   a second possibility: UCI carried by the PUCCH associated with the same spatial information is multiplexed into the PUSCH, and the PUCCH with spatial information different from the PUSCH is not transmitted.

This scenario may apply to multiple PUCCHs scheduled by single DCI and transmitted in an SFN/SDM manner.

For the PUCCH scheduled by single DCI, only the UCI carried by one PUCCH is transmitted, while the other PUCCH corresponding to spatial relation is discarded. Although this reduces the diversity gain of PUCCH transmission, the probability that the base station correctly receives the UCI carried by the PUCCH is relatively high, and the correct transmission of the PUSCH is ensured.

FIG. 9A is a first schematic diagram of a fourth manner according to an embodiment of the present application. In FIG. 9A, PUCCH#1, PUCCH#2, and PUSCH#1 are transmitted simultaneously, where spatial information associated with PUCCH#1 is the same as spatial information associated with PUSCH#1. In a case where the UE is not configured with the first transmission manner, the UE determines that the multiplexing manner is the fourth manner; according to the fourth manner, the UE transmits PUSCH#1, the UE does not transmit PUCCH#1 and PUCCH#2, and uses PUSCH#1 to transmit the UCI carried by PUCCH#1. That is, the UCI carried by PUCCH#1 is multiplexed into PUSCH#1, the UE transmits PUSCH#1, and does not transmit PUCCH#1 and PUCCH#2. FIG. 9A illustrates the case where PUCCH#1, PUCCH#2, and PUSCH#1 completely overlap in the time domain. For cases where PUCCH#1, PUCCH#2, and PUSCH#1 partially overlap in the time domain, or PUCCH#1, PUCCH#2, and PUSCH#1 are transmitted in the first time unit, the multiplexing manner is the same as shown in FIG. 9A.

A third possibility: if a priority corresponding to priority indexes of the multiple PUCCHs is higher than a priority corresponding to a priority index of the PUSCH, the PUSCH is discarded, and only the multiple PUCCHs are transmitted; and if the priority corresponding to the priority indexes of the multiple PUCCHs is lower than or equal to the priority corresponding to the priority index of the PUSCH, the UCI carried by PUCCH associated with the same spatial information is multiplexed into the PUSCH, and the PUCCH with spatial information different from the PUSCH is not transmitted.

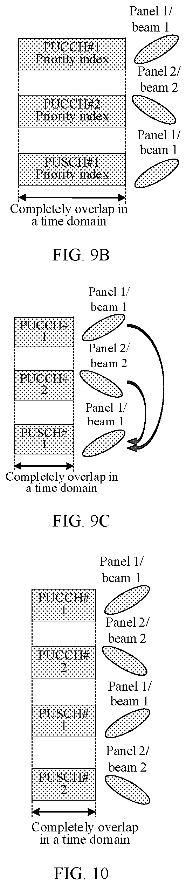

FIG. 9B is a second schematic diagram of a fourth manner according to an embodiment of the present application. In FIG. 9B, PUCCH#1, PUCCH#2, and PUSCH#1 are transmitted simultaneously, where the priority corresponding to the priority index of PUCCH#1 is the same as the priority corresponding to the priority index of PUCCH#2. If the priority corresponding to the priority index of PUCCH#1/PUCCH#2 is higher than the priority corresponding to the priority index of PUSCH#1, PUSCH#1 is discarded, and only the multiple PUCCHs are transmitted, such as only PUCCH#1 and PUCCH#2 in FIG. 9B. If the priority corresponding to the priority index of PUCCH#1/PUCCH#2 is lower than or equal to the priority corresponding to the priority index of PUSCH#1, the UCI carried by the PUCCH associated with the same spatial information is multiplexed into the PUSCH, and the PUCCH with spatial information different from the PUSCH is not transmitted. Taking FIG. 9B as an example, if the spatial information associated with PUCCH#1 is the same as the spatial information associated with PUSCH#1, and the spatial information associated with PUCCH#2 is different from the spatial information associated with PUSCH, the UCI carried by PUCCH#1 is multiplexed into the PUSCH. The UE transmits PUSCH#1 carrying the UCI and does not transmit PUCCH#1 or PUCCH#2. FIG. 9B illustrates the case where PUCCH#1, PUCCH#2, and PUSCH#1 completely overlap in the time domain. For cases where PUCCH#1, PUCCH#2, and PUSCH#1 partially overlap in the time domain, or PUCCH#1, PUCCH#2, and PUSCH#1 are transmitted within the first time unit, the multiplexing manner is the same as that shown in FIG. 9B.

This case may apply to cases where multiple PUCCHs are scheduled by multiple DCI.

Determining the multiplexing manner according to physical channel priority ensures the transmission of high-priority channels and, to some extent, guarantees the integrity of information transmission.

(2) If the first higher-layer parameter is configured with the second value, the UCI carried by multiple PUCCHs is multiplexed into this PUSCH.

In this example, the UE is not configured with the first transmission manner, which can be understood as the UE not supporting the first UE capability; or as the UE supporting the first UE capability, but the network device not configuring the first transmission manner for the UE.

FIG. 9C is a third schematic diagram of a fourth manner according to an embodiment of the present application. In FIG. 9C, PUCCH#1, PUCCH#2, and PUSCH#1 are transmitted simultaneously, where the spatial information associated with PUCCH#1 is the same as the spatial information associated with PUSCH#1, and the spatial information associated with PUCCH#2 is different from the spatial information associated with PUSCH#1. In a case where the UE is not configured with the first transmission manner, the UE determines that the multiplexing method is the fourth method. According to this fourth manner, the UE transmits PUSCH#1, the UE does not transmit PUCCH#1 or PUCCH#2, and uses PUSCH#1 to transmit the UCI carried by PUCCH#1 and the UCI carried by PUCCH#2. That is to say, the UCI carried by PUCCH#1 and the UCI carried by PUCCH#2 are both multiplexed into PUSCH#1, and the UE transmits PUSCH#1, and does not transmit PUCCH#1 or PUCCH#2. FIG. 9C illustrates the case where PUCCH#1, PUCCH#2, and PUSCH#1 completely overlap in the time domain. For cases where PUCCH#1, PUCCH#2, and PUSCH#1 partially overlap in the time domain, or PUCCH#1, PUCCH#2, and PUSCH#1 are transmitted within the first time unit, the multiplexing manner is the same as that shown in FIG. 9C.

In this case, with ideal backhaul between multi-TRPs, it is only necessary to multiplex all UCIs carried by PUCCHs into a PUSCH, making the implementation simpler.

Embodiment 3:
in this embodiment, the multiplexing manner may only be related to the first higher-layer parameter ,and may be unrelated to the first UE capability/first transmission manner.

In this embodiment, multiple PUCCHs overlap with multiple PUSCHs in the time domain, or multiple PUCCHs and multiple PUSCHs are transmitted within the first time unit, where the multiple PUCCHs may be multiple PUCCHs scheduled by multiple DCI and transmitted based on different spatial information, and the multiple PUSCHs may be multiple PUSCHs scheduled by multiple DCI and transmitted based on different spatial information. Overlapping in the time domain may include partially overlapping or completely overlapping. FIG. 10 is a schematic diagram of multiple PUCCHs completely overlapping with multiple PUSCHs in a time domain,
where the multiple PUSCHs include multiple PUSCHs simultaneously transmitted based on different spatial information. These multiple PUSCHs may be PUSCHs scheduled by different downlink control information (DCI), or PUSCHs scheduled by one DCI, or configured grant PUSCHs. That is, the multiple PUSCHs may all be DCI-scheduled PUSCHs, or all configured grant PUSCHs, or some may be DCI-scheduled PUSCHs and others may be configured grant PUSCHs. For multiple PUSCHs scheduled by the DCI, they may be scheduled by different DCI or by single DCI.

The multiple PUCCHs are multiple PUCCHs scheduled by single DCI, transmitted based on different spatial information and transmitted in an SFN manner, or the multiple PUCCHs are PUCCHs scheduled by multiple DCI and transmitted based on different spatial information, or the multiple PUCCHs are PUCCHs scheduled by single DCI, transmitted based on different spatial information and transmitted in an SDM manner.

The UE determines the multiplexing manner of UCI as the target manner. The target manner is a fifth manner.

The fifth manner: if the first higher-layer parameter is configured with the first value, the UE multiplexes the UCI associated with the target spatial information into the PUSCH associated with the same target spatial information, where the target spatial information is any one of the spatial information associated with multiple PUCCHs or PUSCHs.

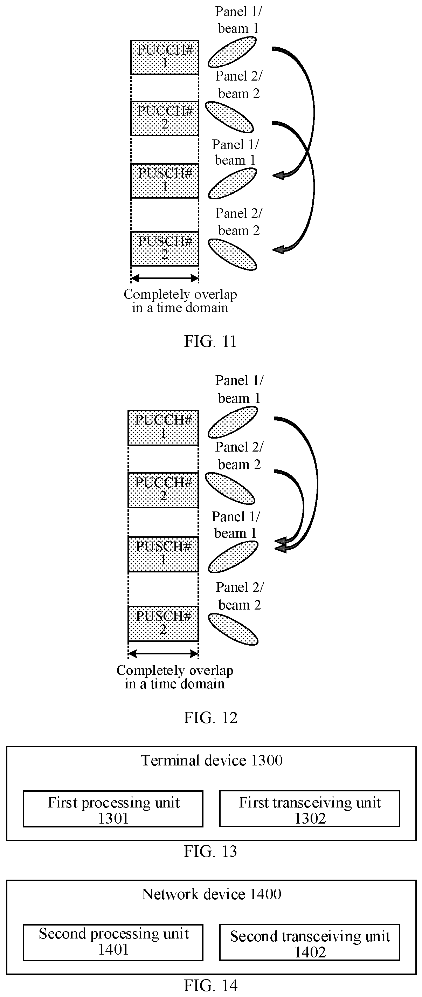

FIG. 11 is a schematic diagram of a fifth manner according to an embodiment of the present application. In FIG. 11, PUCCH#1, PUCCH#2, PUSCH#1, and PUSCH#2 are transmitted simultaneously, where the spatial information associated with PUCCH#1 is the same as the spatial information associated with PUSCH#1, and the spatial information associated with PUCCH#2 is the same as the spatial information associated with PUSCH#2. In a case where the first higher-layer parameter of the UE is configured with a first value, the UE determines that the multiplexing manner is the fifth manner. According to the fifth manner, the UE transmits PUSCH#1 and PUSCH#2, the UE does not transmit PUCCH#1 and PUCCH#2, uses PUSCH#1 to transmit the UCI carried by PUCCH#1, and uses PUSCH#2 to transmit the UCI carried by PUCCH#2. That is to say, the UCI carried by PUCCH#1 is multiplexed into PUSCH#1 associated with the same spatial information, and the UCI carried by PUCCH#2 is multiplexed into PUSCH#2 associated with the same spatial information. The UE may simultaneously transmit PUSCH#1 and PUSCH#2 and not transmit PUCCH#1 and PUCCH#2. FIG. 11 illustrates an example where PUCCH#1, PUCCH#2, PUSCH#1, and PUSCH#2 completely overlap in the time domain. For cases where PUCCH#1, PUCCH#2, PUSCH#1, and PUSCH#2 partially overlap in the time domain, or PUCCH#1, PUCCH#2, PUSCH#1 and PUSCH#2 are transmitted within the first time unit, the multiplexing manner is the same as shown in FIG. 11.

Using the multiplexing manner enables perform UCI multiplexing according to spatial information, ensuring the complete transmission of all information.

A sixth manner: if the first higher-layer parameter is configured with a second value, the terminal device multiplexes the UCI carried by multiple PUCCHs into one PUSCH, such as the target PUSCH. The target PUSCH may include one or more of the following:
a PUSCH associated with a first joint/UL TCI state; or
a PUSCH associated with a smaller antenna panel identifier or TRP index, such as the antenna panel identifier or TRP index is 0; or
a PUSCH associated with a smaller SRS resource set index, such as the SRS resource set index is 0; or
a PUSCH associated with a smaller reference signal resource index or reference signal resource set index, such as the index or set index is 0; or
a PUSCH associated with a smaller CORESET group index, such as the CORESET group index is 0; or
an earliest PUSCH that starts transmission among the multiple PUSCHs; or
an earliest scheduled PUSCH among the multiple PUSCHs; or
a PUSCH among the multiple PUSCHs that has a highest MCS level.

FIG. 12 is a schematic diagram of a sixth manner according to an embodiment of the present application. In FIG. 12, PUCCH#1, PUCCH#2, PUSCH#1, and PUSCH#2 are transmitted simultaneously. In a case where the first higher-layer parameter of the UE is configured with a second value, the UE determines that the multiplexing manner is the sixth manner. According to the sixth manner, the UE transmits PUSCH#1 and PUSCH#2, and the UE does not transmit PUCCH#1 and PUCCH#2. In the example shown in FIG. 12, PUSCH#1 is the target PUSCH, so the UE uses PUSCH#1 to carry the UCI carried by PUCCH#1 and the UCI carried by PUCCH#2. That is to say, the UCI carried by PUCCH#1 and the UCI carried by PUCCH#2 are both multiplexed into the target PUSCH. The UE may simultaneously transmit PUSCH#1 and PUSCH#2 and not transmit PUCCH#1 and PUCCH#2. FIG. 12 illustrates an example where PUCCH#1, PUCCH#2, PUSCH#1, and PUSCH#2 completely overlap in the time domain. For cases where PUCCH#1, PUCCH#2, PUSCH#1, and PUSCH#2 partially overlap in the time domain, or PUCCH#1, PUCCH#2, PUSCH#1, and PUSCH#2 are transmitted within the first time unit, the multiplexing manner is the same as shown in FIG. 12.

Using this manner, only the UCI carried by multiple PUCCHs needs to be multiplexed into one target PUSCH, making the implementation simpler. The PUSCH with the highest MCS level, which serves as the target PUSCH for carrying UCI, provides higher reliability. The earliest scheduled PUSCH among multiple PUSCHs, serving as the target PUSCH, enables the UCI to be transmitted as early as possible, reducing transmission delay.

Embodiment 4:
in the Embodiment 1 to Embodiment 3, the network device configures the UE with a first transmission manner and a second transmission manner. This embodiment describes the configuration manner of the first transmission manner and the second transmission manners, the configuration may be applied to Embodiment 1 to Embodiment 3.

### (1) Configuration manner of the first transmission manner:

A first configuration method: the configuration information of the first transmission manner is carried in the higher-layer parameter PUCCH-Config. For example, configuration is performed through enumeration. For example, if the first transmission manner in the higher-layer parameter PUCCH-Config is configured with true, it indicates that the UE is configured with the first transmission manner; if the first transmission manner in the higher-layer parameter PUCCH-Config is configured with false or not configured, it indicates that the UE is not configured with the first transmission manner. Alternatively, if the first transmission manner in the higher-layer parameter PUCCH-Config is configured with false, it indicates that the UE is configured with the first transmission manner; if the first transmission manner in the higher-layer parameter PUCCH-Config is configured with true, it indicates that the UE is not configured with the first transmission manner. An example of configuring the first transmission manner in the higher-layer parameter PUCCH-Config is as follows:

```
        PUCCH-Config ::= SEQUENCE{
             ...
             First transmission manner ENUMERATED {true}
             ...
        }
```

Using PUCCH-Config for configuration allows a larger scope of configuration, as all resources included in PUCCH-Config may be configured with the first transmission manner.

A second configuration method: the configuration information of the first transmission manner is carried in the higher-layer parameter PUCCH-resource or PUCCH-ResourceGroup. For example, configuration is performed through enumeration. For example, if the first transmission manner in the higher-layer parameter PUCCH-resource or PUCCH-ResourceGroup is configured with true, it indicates that the UE is configured with the first transmission manner; if the first transmission manner in the higher-layer parameter PUCCH-resource or PUCCH-ResourceGroup is configured with false or the first transmission manner is not configured, it indicates that the UE is not configured with the first transmission manner. Alternatively, if the first transmission manner in the higher-layer parameter PUCCH-resource or PUCCH-ResourceGroup is configured with false, it indicates that the UE is configured with the first transmission manner; if the first transmission manner in the higher-layer parameter PUCCH-resource or PUCCH-ResourceGroup is configured with true, it indicates that the UE is not configured with the first transmission manner. An example of configuring the first transmission manner in the higher-layer parameter PUCCH-ResourceGroup is as follows:

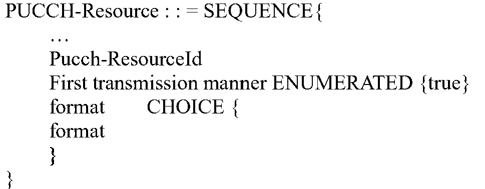

Using the higher-layer parameter PUCCH-resource for configuration allows configuring the first transmission manner at the resource granularity, enabling different configurations for different resources.

An example of configuring the first transmission manner in the higher-layer parameter PUCCH-ResourceGroup is as follows:

```
        PUCCH-ResourceGroup ::= SEQUENCE {
            pucch-ResourceGroupId-r16 PUCCH-ResourceGroupId-r16,
            resourcePerGroupList-r16 SEQUENCE (SIZE (1..maxNrofPUCCH-ResourcesPerGroup-r16)) OF
        PUCCH-ResourceId
            First transmission manner ENUMERATED {true}
        }
```

Using the higher-layer parameter PUCCH-ResourceGroup for configuration provides a larger configuration scope than using PUCCH-resource for configuration and a smaller scope than using PUCCH-Config for configuration, allowing flexible configuration.

A third configuration method: the configuration information of the first transmission manner is carried in the higher-layer parameter TCI-State. For example, configuration is performed through enumeration. For example, if the first transmission manner in the higher-layer parameter TCI-State is configured with true, it indicates that the UE is configured with the first transmission manner; if the first transmission manner in the higher-layer parameter TCI-State is configured with false or the first transmission manner is not configured, it indicates that the UE is not configured with the first transmission manner. Alternatively, if the first transmission manner in the higher-layer parameter TCI-State is configured with false, it indicates that the UE is configured with the first transmission manner; if the first transmission manner in the higher-layer parameter TCI-State is configured with true, it indicates that the UE is not configured with the first transmission manner.

A fourth configuration method: the configuration information of the first transmission manner is carried in the higher-layer parameter TCI-UL-State. For example, configuration is performed through enumeration. For example, if the first transmission manner in the higher-layer parameter TCI-UL-State is configured with true, it indicates that the UE is configured with the first transmission manner; if the first transmission manner in the higher-layer parameter TCI-UL-State is configured with false or the first transmission manner is not configured, it indicates that the UE is not configured with the first transmission manner. Alternatively, if the first transmission manner in the higher-layer parameter TCI-UL-State is configured with false, it indicates that the UE is configured with the first transmission manner; if the first transmission manner in the higher-layer parameter TCI-UL-State is configured with true, it indicates that the UE is not configured with the first transmission manner.

A fifth configuration method: the configuration information of the first transmission manner is carried in an MAC CE. For example, the configuration information of the first transmission manner is carried in an MAC CE for unified TCI state activation/deactivation. The MAC CE structure includes one or more of the following:
the first transmission manner, which may be indicated using 1 bit.
a serving cell ID;
a downlink BWP ID;
an uplink BWP ID;
a quantity indication field of a TCI state corresponding toTCI codepoint ;
an unified TCI state/downlink TCI state, or a uplink TCI state;
a TCI state ID; or
a reserved bits.

Associated with the unified TCI state, when configuring two TCI states, the configuration state of the first transmission manner may be adjusted more flexibly compared to RRC signaling.

A sixth configuration method: the configuration information of the first transmission manner is carried in PUSCH-Config. For example, configuration is performed through enumeration. For example, if the first transmission manner in the higher-layer parameter PUSCH-Config is configured with true, it indicates that the UE is configured with the first transmission manner; if the first transmission manner in the higher-layer parameter PUSCH-Config is configured with false or the first transmission manner is not configured, it indicates that the UE is not configured with the first transmission manner. Alternatively, if the first transmission manner in the higher-layer parameter PUSCH-Config is configured with false, it indicates that the UE is configured with the first transmission manner; if the first transmission manner in the higher-layer parameter PUSCH-Config is configured with true, it indicates that the UE is not configured with the first transmission manner. An example of configuring the first transmission manner in the higher-layer parameter PUSCH-Config is as follows:

```
        PUSCH-Config ::= SEQUENCE {
             ...
             First transmission manner ENUMERATED {true}
             ...
        }
```

(2) Configuration of the second transmission manner:
a first configuration method: carried in a higher-layer parameter PUCCH-Config;
a second configuration method: carried in a higher-layer parameter PUCCH-resource or PUCCH-ResourceGroup;
a third configuration method: carried in a higher-layer parameter TCI-State;
a fourth configuration method: carried in a higher-layer parameter TCI-UL-State; and
a fifth configuration method: carried in an MAC CE.

The above five configuration methods are the same as the first to fifth configuration methods of the first transmission manner, respectively, and will not be repeated here.

The embodiments of the present application further propose a terminal device. FIG. 13 is a schematic block diagram of a terminal device 1300 according to an embodiment of the present application. The terminal device 1300 may include:
a first processing unit 1301, configured to determine a multiplexing manner according to at least one of: configuration information of a first higher-layer parameter or configuration information of a first transmission manner; and
a first transceiver unit 1302, configured to transmit UCI carried by one or more PUCCHs according to the multiplexing manner.

In some implementations, the configuration information of the first transmission manner includes:
the terminal device being configured with the first transmission manner; or
the terminal device being not configured with the first transmission manner.

In some implementations, the first transmission manner includes: PUCCH and PUSCH that are associated with different spatial information being capable of simultaneous transmission.

In some implementations, the configuration information of the first higher-layer parameter includes a first value or a second value.

In some implementations, the first processing unit 1301 is further configured to determine that one PUCCH overlaps with multiple PUSCHs in a time domain, or that one PUCCH and multiple PUSCHs are transmitted within a first time unit.

In some implementations, the first processing unit 1301 is configured to: in a case where the terminal device is configured with the first transmission manner and the terminal device is configured with a PUSCH transmission scheduled by multiple DCI, determine that the multiplexing manner is: multiplexing UCI carried by the one PUCCH into a first PUSCH;
where spatial information associated with the PUCCH is the same as spatial information associated with the first PUSCH, and the multiple PUSCHs include the first PUSCH.

In some implementations, the first processing unit 1301 is configured to: in a case where the terminal device is not configured with the first transmission manner, and the terminal device is configured with a PUSCH transmission scheduled by multiple DCI, determine that the multiplexing manner is:
if the configuration information of the first higher-layer parameter is a first value, multiplexing UCI carried by the one PUCCH into a first PUSCH, where spatial information associated with the PUCCH is the same as spatial information associated with the first PUSCH, and the multiple PUSCHs include the first PUSCH; and
if the configuration information of the first higher-layer parameter is a second value, multiplexing UCI carried by PUCCH into a second PUSCH.

In some implementations, the first processing unit 1301 is configured to determine that multiple PUCCHs overlap with one PUSCH in a time domain, or multiple PUCCHs and one PUSCH are transmitted within a first time unit.

In some implementations, the first processing unit 1301 is configured to: in a case where the terminal device is configured with a first transmission manner, determine that the multiplexing manner is: multiplexing UCI carried by a first PUCCH into the PUSCH;
where spatial information associated with the first PUCCH is the same as spatial information associated with the PUSCH, and the multiple PUCCHs include the first PUCCH.

In some implementations, the first processing unit 1301 is configured to: in a case where the terminal device is not configured with the first transmission manner, determine that the multiplexing manner is:
if the configuration information of the first higher-layer parameter is a first value, multiplexing UCI carried by a first PUCCH into the PUSCH and not transmitting other PUCCHs among the multiple PUCCHs excluding the first PUCCH,
where spatial information associated with the first PUCCH is the same as spatial information associated with the PUSCH, and the multiple PUCCHs include the first PUCCH.

In some implementations, the first processing unit 1301 is configured to: in a case where the terminal device is not configured with the first transmission manner, determine that the multiplexing manner is:
if the configuration information of the first higher-layer parameter is a first value, then:
in a case where a priority corresponding to priority indexes of the multiple PUCCHs is higher than a priority corresponding to a priority index of the PUSCH, determining to transmit the multiple PUCCHs and not transmit the PUSCH; and
in a case where the priority corresponding to the priority indexes of the multiple PUCCHs is lower than or equal to the priority corresponding to the priority index of the PUSCH, multiplexing UCI carried by a first PUCCH into the PUSCH and not transmitting other PUCCHs among the multiple PUCCHs excluding the first PUCCH, where spatial information associated with the first PUCCH is the same as spatial information associated with the PUSCH, and the multiple PUCCHs include the first PUCCH.

In some implementations, the first processing unit 1301 is configured to: in a case where the terminal device is not configured with the first transmission manner, determine that the multiplexing manner is:
if the configuration information of the first higher-layer parameter is a second value, multiplexing UCI carried by the multiple PUCCHs into the PUSCH.

In some implementations, the first transceiving unit 1302 is further configured to transmit a first capability of the terminal device to a network device, where the first capability is used to indicate that the terminal device supports simultaneous transmission of PUCCH and PUSCH that are associated with different spatial information.

In some implementations, the first transceiver unit 1302 is further configured to receive the configuration information of the first transmission manner transmitted by a network device.

In some implementations, the first transceiver unit 1302 is configured to receive a second higher-layer parameter or an MAC CE transmitted by the network device, where the second higher-layer parameter or the MAC CE carries the configuration information of the first transmission manner.

In some implementations, the second higher-layer parameter includes one or more of the following:
a PUCCH configuration;
a PUCCH resource;
a PUCCH resource group;
a TCI state;
a TCI uplink state; or
a PUSCH configuration.

In some implementations, the first transceiver unit 1302 is further configured to transmit a second capability of the terminal device, where the second capability is used to indicate that the terminal device supports simultaneous transmission of multiple PUCCHs associated with different spatial information.

In some implementations, the first transceiver unit 1302 is further configured to receive configuration information of a second transmission manner transmitted by the network device, where the configuration information of the second transmission manner indicates that the terminal device is configured with the second transmission manner or the terminal device is not configured with the first transmission manner.

In some implementations, the second transmission manner includes: multiple PUCCHs associated with different spatial information being capable of simultaneous transmission.

In some implementations, the first transceiver unit 1302 is configured to receive a third higher-layer parameter or an MAC CE transmitted by the network device, where the third higher-layer parameter or the MAC CE carries the configuration information of the second transmission manner.

In some implementations, the third higher-layer parameter includes one or more of the following:
a PUCCH configuration;
a PUCCH resource;
a PUCCH resource group;
a TCI state; or
a TCI uplink state.

In some implementations, the first processing unit 1301 is further configured to determine that multiple PUCCHs overlap with multiple PUSCHs in a time domain, or that multiple PUCCHs and multiple PUSCHs are transmitted within a first time unit.

In some implementations, the first processing unit 1301 is configured to: in a case where the configuration information of the first higher-layer parameter is a first value, determine that the multiplexing manner is: respectively multiplexing UCI carried by one or more PUCCHs of the multiple PUCCHs into a first PUSCH corresponding to the PUCCH;
where spatial information associated with the PUCCH is the same as spatial information associated with the first PUSCH corresponding to the PUCCH, and the multiple PUSCHs include the first PUSCH.

In some implementations, the first processing unit 1301 is configured to: in a case where the configuration information of the first higher-layer parameter is a second value, determine that the multiplexing manner is: multiplexing UCI carried by one or more of the multiple PUCCHs into a second PUSCH.

In some implementations, the second PUSCH includes one or more of the following:
a PUSCH among the multiple PUSCHs and associated with a first joint TCI state or an UL TCI state;
a PUSCH among the multiple PUSCHs and associated with a smallest antenna panel identifier or a smallest TRP index;
a PUSCH among the multiple PUSCHs and associated with a smallest SRS resource set index;
a PUSCH among the multiple PUSCHs and associated with a smallest reference signal resource index or a smallest reference signal resource set index;
a PUSCH among the multiple PUSCHs and associated with a smallest CORESET group index;
an earliest PUSCH that starts transmission among the multiple PUSCHs;
an earliest scheduled PUSCH among the multiple PUSCHs; or
a PUSCH among the multiple PUSCHs that has a highest MCS level.

In some implementations, the multiple PUSCHs include one or more of the following:
multiple PUSCHs scheduled by multiple DCI;
one or more PUSCHs scheduled by single DCI; or
one or more configured grant PUSCHs.

In some implementations, the multiple PUSCHs include: multiple PUSCHs associated with different spatial information, or multiple PUSCHs associated with the same spatial information.

In some implementations, the multiple PUCCHs include one or more of the following:
multiple PUCCHs scheduled by single DCI and transmitted in an SFN manner;
multiple PUCCHs scheduled by single DCI and transmitted in an SDM manner; or
multiple PUCCHs scheduled by multiple DCI.

In some implementations, the multiple PUCCHs include: multiple PUCCHs associated with different spatial information, or multiple PUCCHs associated with the same spatial information.

In some implementations, the spatial information includes one or more of the following:
a joint TCI state;
an UL TCI state;
a control resource set group index;
an SRS resource set;
a reference signal corresponding to spatial relation;
a reference signal corresponding to a QCL of a type D;
an antenna panel identifier;
a TRP index; or
a beam index.

In some implementations, the first higher-layer parameter includes: an HARQ feedback mode configuration.

In some implementations, configuration information of the HARQ feedback mode configuration includes: separate feedback or joint feedback.

The terminal device 1300 of the embodiments of the present application may implement the corresponding functions of the terminal device in the method embodiments. For the processes, functions, implementations, and beneficial effects corresponding to each module (sub-module, unit, or component, etc.) in the terminal device 1300, please refer to the corresponding descriptions in the method embodiments, which will not be repeated here. It should be noted that the functions described for each module (sub-module, unit, or component, etc.) in the terminal device 1300 of the embodiments of the present application may be implemented by different modules (sub-modules, units, or components, etc.) or by the same module (sub-module, unit, or component, etc.).

The embodiments of the present application further propose a network device. FIG. 14 is a schematic block diagram of a network device 1400 according to an embodiment of the present application. The network device 1400 may include:
a second processing unit 1401, configured to configure for a terminal device at least one of: a first higher-layer parameter or a first transmission manner; and
a second transceiver unit 1402, configured to receive UCI carried by one or more PUCCHs transmitted by the terminal device according to the multiplexing manner corresponding to at least one of: the first higher-layer parameter or the first transmission manner.

In some implementations, the second processing unit 1401 is configured to configure the terminal device with the first transmission manner; or, not to configure the terminal device with the first transmission manner.

In some implementations, the first transmission manner includes: PUCCH and PUSCH that are associated with different spatial information being capable of simultaneous transmission.

In some implementations, the configuration information of the first higher-layer parameter includes a first value or a second value.

In some implementations, the multiplexing manner corresponding to at least one of: the first higher-layer parameter or the first transmission manner includes:
when one PUCCH of the terminal device overlaps with multiple PUSCHs of the terminal device in a time domain, or one PUCCH of the terminal device and multiple PUSCHs of the terminal device are transmitted within a first time unit, in a case where the network device configures the terminal device with the first transmission manner, and the terminal device is configured with a PUSCH transmission scheduled by multiple DCI, the multiplexing manner is: multiplexing UCI carried by the one PUCCH into a first PUSCH;
where spatial information associated with the PUCCH is the same as spatial information associated with the first PUSCH, and the multiple PUSCHs include the first PUSCH.

In some implementations, the multiplexing manner corresponding to at least one of the first higher-layer parameter or the first transmission manner includes:
when one PUCCH of the terminal device overlaps with multiple PUSCHs of the terminal device in a time domain, or one PUCCH of the terminal device and multiple PUSCHs of the terminal device are transmitted within a first time unit, in a case where the network device configures the terminal device with the first transmission manner, and the terminal device is configured with a PUSCH transmission scheduled by multiple DCI, the multiplexing manner is:
if the configuration information of the first higher-layer parameter is a first value, multiplexing UCI carried by the one PUCCH into a first PUSCH; where spatial information associated with the PUCCH is the same as spatial information associated with the first PUSCH, and the multiple PUSCHs include the first PUSCH; and
if the configuration information of the first higher-layer parameter is a second value, multiplexing UCI carried by PUCCH into a second PUSCH.

In some implementations, the multiplexing manner corresponding to at least one of the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device configures the terminal device with the first transmission manner, the multiplexing manner is: multiplexing UCI carried by a first PUCCH into the PUSCH;
where spatial information associated with the first PUCCH is the same as spatial information associated with the PUSCH, and the multiple PUCCHs include the first PUCCH.

In some implementations, the multiplexing manner corresponding to at least one of: the first higher-layer parameter or the first transmission manner includes: when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a first value, multiplexing UCI carried by a first PUCCH into the PUSCH and not transmitting other PUCCHs among the multiple PUCCHs excluding the first PUCCH,
where spatial information associated with the first PUCCH is the same as spatial information associated with the PUSCH, and the multiple PUCCHs include the first PUCCH.

In some implementations, the multiplexing manner corresponding to at least one of: the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a first value, then:
in a case where a priority corresponding to priority indexes of the multiple PUCCHs is higher than a priority corresponding to a priority index of the PUSCH, transmitting the multiple PUCCHs and not transmitting the PUSCH; and
in a case where the priority corresponding to the priority indexes of the multiple PUCCHs is lower than or equal to the priority corresponding to the priority index of the PUSCH, multiplexing UCI carried by a first PUCCH into the PUSCH and not transmitting other PUCCHs among the multiple PUCCHs excluding the first PUCCH, where spatial information associated with the first PUCCH is the same as spatial information associated with the PUSCH, and the multiple PUCCHs include the first PUCCH.

In some implementations, the multiplexing manner corresponding to at least one of the first higher-layer parameter or the first transmission manner includes:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a second value, multiplexing UCI carried by the multiple PUCCHs into the PUSCH.

In some implementations, the second transceiver unit 1402 is further configured to receive a first capability transmitted by the terminal device, where the first capability is used to indicate that the terminal device supports simultaneous transmission of PUCCH and PUSCH that are associated with different spatial information.

In some implementations, the second processing unit 1401 is further configured to transmit configuration information of the first transmission manner to the terminal device.

In some implementations, the second transceiver unit 1402 is configured to transmit a second higher-layer parameter or an MAC CE to the terminal device, where the second higher-layer parameter or the MAC CE carries the configuration information of the first transmission manner.

In some implementations, the second higher-layer parameter includes one or more of the following:
a PUCCH configuration;
a PUCCH resource;
a PUCCH resource group;
a TCI state;
a TCI uplink state; or
a PUSCH configuration.

In some implementations, the second transceiver unit 1402 is further configured to receive a second capability from the terminal device, where the second capability is used to indicate that the terminal device supports simultaneous transmission of multiple PUCCHs associated with different spatial information.

In some implementations, the second transceiver unit 1402 is further configured to transmit configuration information of a second transmission manner to the terminal device, where the configuration information of the second transmission manner indicates that the terminal device is configured with the second transmission manner or the terminal device is not configured with the second transmission manner.

In some implementations, the second transmission manner includes: multiple PUCCHs associated with different spatial information being capable of simultaneous transmission.

In some implementations, the second transceiver unit 1402 is configured to transmit a third higher-layer parameter or an MAC CE to the terminal device, where the third higher-layer parameter or the MAC CE carries the configuration information of the second transmission manner.

In some implementations, the third higher-layer parameter includes one or more of the following:
a PUCCH configuration;
a PUCCH resource;
a PUCCH resource group;
a TCI state; or
a TCI uplink state.

In some implementations, the multiplexing manner corresponding to at least one of: the first higher-layer parameter or the first transmission manner includes:
when multiple PUCCHs of the terminal device overlap with multiple PUSCHs of the terminal device in a time domain, or multiple PUCCHs of the terminal device and multiple PUSCHs of the terminal device are transmitted within a first time unit, in a case where the configuration information of the first higher-layer parameter is a first value, the multiplexing manner is: respectively multiplexing UCI carried by one or more of the multiple PUCCHs into a first PUSCH corresponding to the PUCCH;
where spatial information associated with the PUCCH is the same as spatial information associated with the first PUSCH corresponding to the PUCCH, and the multiple PUSCHs include the first PUSCH.

In some implementations, the multiplexing manner corresponding to at least one of: the first higher-layer parameter or the first transmission manner includes:
when multiple PUCCHs of the terminal device overlap with multiple PUSCHs of the terminal device in a time domain, or multiple PUCCHs of the terminal device and multiple PUSCHs of the terminal device are transmitted within a first time unit, in a case where the configuration information of the first higher-layer parameter is a second value, the multiplexing manner is: multiplexing UCI carried by one or more of the multiple PUCCHs into a second PUSCH.

In some implementations, the second PUSCH includes one or more of the following:
a PUSCH among the multiple PUSCHs and associated with a first joint TCI state or an UL TCI state;
a PUSCH among the multiple PUSCHs and associated with a smallest antenna panel identifier or a smallest TRP index;
a PUSCH among the multiple PUSCHs and associated with a smallest SRS resource set index;
a PUSCH among the multiple PUSCHs and associated with a smallest reference signal resource index or a smallest reference signal resource set index;
a PUSCH among the multiple PUSCHs and associated with a smallest CORESET group index;
an earliest PUSCH that starts transmission among the multiple PUSCHs;
an earliest scheduled PUSCH among the multiple PUSCHs; or
a PUSCH among the multiple PUSCHs that has a highest MCS level.

In some implementations, the multiple PUSCHs include one or more of the following:
multiple PUSCHs scheduled by multiple DCI;
one or more PUSCHs scheduled by single DCI; or
one or more configured grant PUSCHs.

In some implementations, the multiple PUSCHs include: multiple PUSCHs associated with different spatial information, or multiple PUSCHs associated with the same spatial information.

In some implementations, the multiple PUCCHs include one or more of the following:
multiple PUCCHs scheduled by single DCI and transmitted in an SFN manner;
multiple PUCCHs scheduled by single DCI and transmitted in an SDM manner; or
multiple PUCCHs scheduled by multiple DCI.

In some implementations, the multiple PUCCHs include: multiple PUCCHs associated with different spatial information, or multiple PUCCHs associated with the same spatial information.

In some implementations, the spatial information includes one or more of the following:
a joint TCI state;
an UL TCI state;
a control resource set group index;
an SRS resource set;
a reference signal corresponding to spatial relation;
a reference signal corresponding to a QCL of a type D;
an antenna panel identifier;
a TRP index; or
a beam index.

In some implementations, the first higher-layer parameter includes: an HARQ feedback mode configuration.

In some implementations, configuration information of the HARQ feedback mode configuration includes: separate feedback or joint feedback.

The network device 1400 in the embodiments of the present application may implement the corresponding functions of the network device in the method embodiments. For the processes, functions, implementations, and beneficial effects corresponding to each module (sub-module, unit, or component, etc.) in the network device 1400, please refer to the corresponding descriptions in the method embodiments, which will not be repeated here. It should be noted that the functions described for each module (sub-module, unit, or component, etc.) in the network device 1400 in the embodiments of the present application may be implemented by different modules (sub-modules, units, or components, etc.) or by the same module (sub-module, unit, or component, etc.).

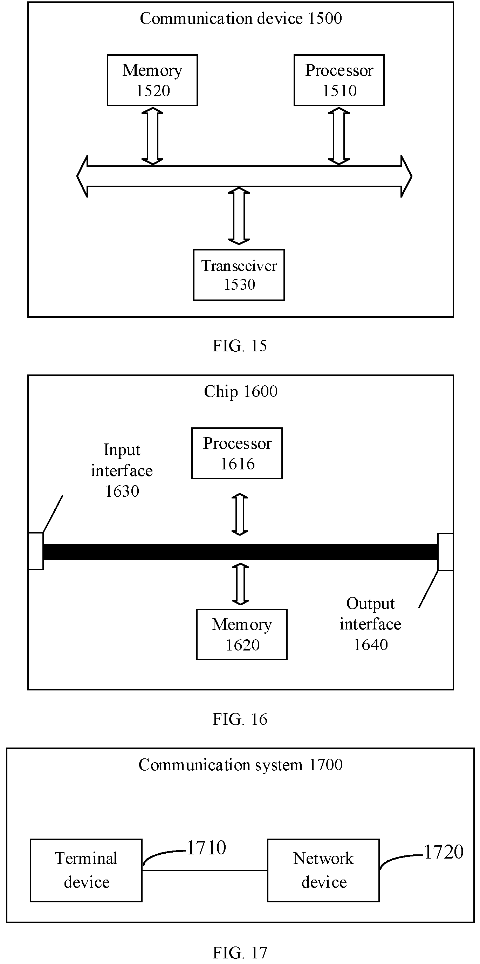

FIG. 15 is a schematic structural diagram of a communication device 1500 according to an embodiment of the present application. The communication device 1500 includes a processor 1510, and the processor 1510 may invoke a computer program from a memory and execute the computer program, to enable the communication device **1**5**00** to implement the method in the embodiments of the present application.

In an implementation, the communication device 1500 may further include a memory 1520. The processor 1510 may invoke a computer program from the memory 1520 and execute the computer program, to enable the communication device 1500 to implement the method in the embodiments of the present application.

The memory 1520 may be a separate device independent of the processor 1510, or may be integrated into the processor 1510.

In an implementation, the communication device 1500 may further include a transceiver 1530, and the processor 1510 may control the transceiver 1530 to communicate with other devices, and specifically, the processor 1510 may control the transceiver 1530 to transmit information or data to other devices, or receive information or data transmitted from devices.

The transceiver 1530 may include a transmitter and a receiver. The transceiver 1530 may further include an antenna, and the number of antennas may be one or more.

In an implementation, the communication device 1500 may be a terminal device in the embodiments of the present application, and the communication device 1500 may implement the corresponding procedures implemented by the terminal device in each method of the embodiments of the present application, which will not be repeated here for the sake of brevity. The terminal device includes a memory, a processor, and a transceiver. The memory may store a program executed by the terminal device; the processor executes the program, and specifically, the processor may perform the actions performed by the first processing unit 1301; and the transceiver, under the control of the processor, performs the actions performed by the first transceiving unit 1302.

In an implementation, the communication device 1500 may be a network device in the embodiments of the present application, and the communication device 1500 may implement the corresponding procedures implemented by the network device in each method of the embodiments of the present application, which will not be repeated here for the sake of brevity. The network device includes a memory, a processor, and a transceiver. The memory may store a program executed by the network device; the processor executes the program; and specifically, the processor may perform the actions performed by the second processing unit 1401; and the transceiver, under the control of the processor, performs the actions performed by the second transceiving unit 1402.

FIG. 16 is a schematic structural diagram of a chip 1600 according to an embodiment of the present application. The chip 1600 includes a processor 1610, and the processor 1610 may invoke a computer program from a memory and execute the computer program, to implement the method in the embodiments of the present application.

In an implementation, the chip 1600 may further include a memory 1620. The processor 1610 may invoke a computer program from the memory 1620 and execute the computer program, to implement the method performed by the terminal device or the network device in the embodiments of the present application.

The memory 1620 may be a separate device independent of the processor 1610, or may be integrated into the processor 1610.

In an implementation, the chip 1600 may further include an input interface 1630. The processor 1610 may control the input interface 1630 to communicate with other devices or chips, and specifically, the processor 1610 may control the input interface 1630 to acquire information or data transmitted by other devices or chips.

In an implementation, the chip 1600 may further include an output interface 1640. The processor 1610 may control the output interface 1640 to communicate with other devices or chips, and specifically, the processor 1610 may control the output interface 1640 to output information or data to other devices or chips.

In an implementation, the chip may be applied to the network device in the embodiments of the present application, and the chip may implement the corresponding procedures implemented by the network device in each method of the embodiments of the present application, which will not be repeated here for the sake of brevity.

In an implementation, the chip may be applied to the terminal device in the embodiments of the present application, and the chip may implement the corresponding procedures implemented by the terminal device in each method of the embodiments of the present application, which will not be repeated here for the sake of brevity.

The chips applied to the network device and the terminal device may be the same chip or different chips.

It should be understood that the chip mentioned in the embodiments of the present application may also be referred to as a system on chip, a system chip, a chip system or a system-on-chip chip, etc.

The aforementioned processor may be a general-purpose processor, a digital signal processor (DSP), a field programmable gate array (FPGA), an application specific integrated circuit (ASIC), or other programmable logic devices, transistor logic devices, and discrete hardware components, etc. The aforementioned general-purpose processor may be a microprocessor or may be any conventional processor, etc.

The aforementioned memory may be a volatile memory or a non-volatile memory, or may include both the volatile memory and non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the aforementioned memory is exemplary but not a limited illustration. For example, the memory in the embodiments of the present application may also be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM), etc. That is to say, the memory in the embodiments of the present application is intended to include, but is not limited to, these and any other suitable types of memories.

FIG. 17 is a schematic block diagram of a communication system 1700 according to an embodiment of the present application. The communication system 1700 includes a terminal device 1710 and a network device 1720.

The terminal device 1710 includes:
a first determining unit, configured to determine a multiplexing manner according to at least one of: configuration information of a first higher-layer parameter or configuration information of a first transmission manner; and
a first processing unit, configured to transmit UCI carried by one or more PUCCHs according to the multiplexing manner.

The network device 1720 includes:
a second processing unit, configured to configure for a terminal device at least one of: a first higher-layer parameter or a first transmission manner; and
a second transceiver unit, configured to receive UCI carried by one or more PUCCHs transmitted by the terminal device according to a multiplexing manner corresponding to at least one of: the first higher-layer parameter or the first transmission manner.

The terminal device 1710 may be configured to implement corresponding functions performed by the terminal device in the aforementioned method, and the network device 1720 may be configured to implement corresponding functions performed by the network device in the aforementioned method, which will not be repeated here for the sake of brevity.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When the computer program instructions are loaded and executed on a computer, procedures or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (e.g., coaxial cable, optical fiber, digital subscriber line (DSL)) or wireless (e.g., infrared, radio, microwave) means. The computer-readable storage medium may be any available medium accessible to the computer, or a data storage device, such as a server or a data center that integrates one or more available media. The available medium may be a magnetic medium (e.g., a floppy disk, a hard disk, a magnetic tape), an optical medium (e.g., a digital video disc (DVD)), or a semiconductor medium (e.g., a solid state drive (SSD)), etc.

It should be understood that in various embodiments of the present application, the numerical order of the above processes does not imply an order of execution. The execution order of the each process should be determined by its function and internal logic, but should not constitute any limitation on the implementation processes of the embodiments of the present application.

Those skilled in the art may clearly understand that, for convenience and brevity of description, for the specific working processes of the systems, apparatuses, and units described above, please refer to the corresponding processes in the foregoing method embodiments, which will not be repeated here.

The above descriptions are merely specific implementations of the present application. However, the protection scope of the present application is not limited thereto. Any change or substitution that would be readily conceived by a person skilled in the art shall fall within the protection scope of the present application, provided that such change or substitution remains within the technical scope disclosed in the present application. Therefore, the protection scope of the present application should be subject to the protection scope of the claims.

## Claims

1. A communication method, comprising:
determining, by a terminal device, a multiplexing manner according to at least one of: configuration information of a first higher-layer parameter or configuration information of a first transmission manner; and
transmitting, by the terminal device, uplink control information (UCI) carried by one or more physical uplink control channels (PUCCHs) according to the multiplexing manner.

2. The method according to claim 1, wherein the configuration information of the first transmission manner comprises:
the terminal device being configured with the first transmission manner; or
the terminal device being not configured with the first transmission manner.

3. The method according to claim 2, wherein the first transmission manner comprises: PUCCH and physical uplink shared channel (PUSCH) that are associated with different spatial information being capable of simultaneous transmission.

4. The method according to any one of claims 1 to 3, wherein the configuration information of the first higher-layer parameter comprises a first value or a second value.

5. The method according to any one of claims 1 to 4, wherein before determining, by the terminal device, the multiplexing manner, the method further comprises:
determining, by the terminal device, that one PUCCH overlaps with multiple PUSCHs in a time domain, or that one PUCCH and multiple PUSCHs are transmitted within a first time unit.

6. The method according to claim 5, wherein determining, by the terminal device, the multiplexing manner according to at least one of: the configuration information of the first higher-layer parameter or the configuration information of the first transmission manner comprises:
in a case where the terminal device is configured with the first transmission manner, and the terminal device is configured with a PUSCH transmission scheduled by multiple downlink control information (DCI), determining that the multiplexing manner is: multiplexing UCI carried by the one PUCCH into a first PUSCH,
wherein spatial information associated with the PUCCH is the same as spatial information associated with the first PUSCH, and the multiple PUSCHs comprise the first PUSCH.

7. The method according to claim 5, wherein determining, by the terminal device, the multiplexing manner according to at least one of: the configuration information of the first higher-layer parameter or the configuration information of the first transmission manner comprises:
in a case where the terminal device is not configured with the first transmission manner, and the terminal device is configured with a PUSCH transmission scheduled by multiple DCI, determining that the multiplexing manner is:
if the configuration information of the first higher-layer parameter is a first value, multiplexing UCI carried by the one PUCCH into a first PUSCH, wherein spatial information associated with the PUCCH is the same as spatial information associated with the first PUSCH, and the multiple PUSCHs comprise the first PUSCH; and
if the configuration information of the first higher-layer parameter is a second value, multiplexing UCI carried by PUCCH into a second PUSCH.

8. The method according to any one of claims 1 to 4, before determining, by the terminal device, the multiplexing manner, the method further comprises:
determining, by the terminal device, that multiple PUCCHs overlap with one PUSCH in a time domain, or that multiple PUCCHs and one PUSCH are transmitted within a first time unit.

9. The method according to claim 8, wherein determining, by the terminal device, the multiplexing manner according to at least one of: the configuration information of the first higher-layer parameter or the configuration information of the first transmission manner comprises:
in a case where the terminal device is configured with the first transmission manner, determining that the multiplexing manner is: multiplexing UCI carried by a first PUCCH into the PUSCH,
wherein spatial information associated with the first PUCCH is the same as spatial information associated with the PUSCH, and the multiple PUCCHs comprise the first PUCCH.

10. The method according to claim 8, wherein determining, by the terminal device, the multiplexing manner according to at least one of: the configuration information of the first higher-layer parameter or the configuration information of the first transmission manner comprises:
in a case where the terminal device is not configured with the first transmission manner, determining that the multiplexing manner is:
if the configuration information of the first higher-layer parameter is a first value, multiplexing UCI carried by a first PUCCH into the PUSCH and not transmitting other PUCCHs among the multiple PUCCHs excluding the first PUCCH,
wherein spatial information associated with the first PUCCH is the same as spatial information associated with the PUSCH, and the multiple PUCCHs comprise the first PUCCH.

11. The method according to claim 8, wherein determining, by the terminal device, the multiplexing manner according to at least one of: the configuration information of the first higher-layer parameter or the configuration information of the first transmission manner comprises:
in a case where the terminal device is not configured with the first transmission manner, determining that the multiplexing manner is:
if the configuration information of the first higher-layer parameter is a first value, then:
in a case where a priority corresponding to priority indexes of the multiple PUCCHs is higher than a priority corresponding to a priority index of the PUSCH, determining to transmit the multiple PUCCHs and not transmit the PUSCH; and
in a case where the priority corresponding to the priority indexes of the multiple PUCCHs is lower than or equal to the priority corresponding to the priority index of the PUSCH, multiplexing UCI carried by a first PUCCH into the PUSCH and not transmitting other PUCCHs among the multiple PUCCHs excluding the first PUCCH, wherein spatial information associated with the first PUCCH is the same as spatial information associated with the PUSCH, and the multiple PUCCHs comprise the first PUCCH.

12. The method according to claim 8, wherein determining, by the terminal device, the multiplexing manner according to at least one of: the configuration information of the first higher-layer parameter or the configuration information of the first transmission manner comprises:
in a case where the terminal device is not configured with the first transmission manner, determining that the multiplexing manner is:
if the configuration information of the first higher-layer parameter is a second value, multiplexing UCI carried by the multiple PUCCHs into the PUSCH.

13. The method according to any one of claims 1 to 12, wherein before determining, by the terminal device, the multiplexing manner, the method further comprises:
transmitting, by the terminal device, a first capability of the terminal device to a network device, wherein the first capability is used to indicate that the terminal device supports simultaneous transmission of PUCCH and PUSCH that are associated with different spatial information.

14. The method according to any one of claims 1 to 12, further comprising: receiving, by the terminal device, the configuration information of the first transmission manner transmitted by a network device.

15. The method according to claim 14, wherein receiving, by the terminal device, the configuration information of the first transmission manner transmitted by the network device comprises:
receiving, by the terminal device, a second higher-layer parameter or a media access control control element (MAC CE) transmitted by the network device, wherein the second higher-layer parameter or the MAC CE carries the configuration information of the first transmission manner.

16. The method according to claim 15, wherein the second higher-layer parameter comprises one or more of the following:
a PUCCH configuration;
a PUCCH resource;
a PUCCH resource group;
a transmission configuration indicator (TCI) state;
a TCI uplink state; or
a PUSCH configuration.

17. The method according to any one of claims 13 to 16, further comprising: transmitting, by the terminal device, a second capability of the terminal device to the network device, wherein the second capability is used to indicate that the terminal device supports simultaneous transmission of multiple PUCCHs associated with different spatial information.

18. The method according to claim 17, further comprising: receiving, by the terminal device, configuration information of a second transmission manner transmitted by the network device, wherein the configuration information of the second transmission manner indicates that the terminal device is configured with the second transmission manner or the terminal device is not configured with the first transmission manner.

19. The method according to claim 18, wherein the second transmission manner comprises: multiple PUCCHs associated with different spatial information being capable of simultaneous transmission.

20. The method according to claim 18 or 19, wherein receiving, by the terminal device, the configuration information of the second transmission manner transmitted by the network device comprises:
receiving, by the terminal device, a third higher-layer parameter or an MAC CE transmitted by the network device, wherein the third higher-layer parameter or the MAC CE carries the configuration information of the second transmission manner.

21. The method according to claim 20, wherein the third higher-layer parameter comprises one or more of the following:
a PUCCH configuration;
a PUCCH resource;
a PUCCH resource group;
a TCI state; or
a TCI uplink state.

22. The method according to any one of claims 1 to 4, wherein before determining, by the terminal device, the multiplexing manner, the method further comprises:
determining, by the terminal device, that multiple PUCCHs overlap with multiple PUSCHs in a time domain, or that multiple PUCCHs and multiple PUSCHs are transmitted within a first time unit.

23. The method according to claim 22, wherein determining, by the terminal device, the multiplexing manner according to at least one of: the configuration information of the first higher-layer parameter or the configuration information of the first transmission manner comprises:
in a case where the configuration information of the first higher-layer parameter is a first value, determining that the multiplexing manner is: respectively multiplexing UCI carried by one or more of the multiple PUCCHs into a first PUSCH corresponding to the PUCCH,
wherein spatial information associated with the PUCCH is the same as spatial information associated with the first PUSCH corresponding to the PUCCH, and the multiple PUSCHs comprise the first PUSCH.

24. The method according to claim 22, wherein determining, by the terminal device, the multiplexing manner according to at least one of: the configuration information of the first higher-layer parameter or the configuration information of the first transmission manner comprises:
in a case where the configuration information of the first higher-layer parameter is a second value, determining that the multiplexing manner is: multiplexing UCI carried by one or more of the multiple PUCCHs into a second PUSCH.

25. The method according to claim 7 or 24, wherein the second PUSCH comprises one or more of the following:
a PUSCH among the multiple PUSCHs and associated with a first joint TCI state or an uplink (UL) TCI state;
a PUSCH among the multiple PUSCHs and associated with a smallest antenna panel identifier or a smallest transmission reception point (TRP) index;
a PUSCH among the multiple PUSCHs and associated with a smallest sounding reference signal (SRS) resource set index;
a PUSCH among the multiple PUSCHs and associated with a smallest reference signal resource index or a smallest reference signal resource set index;
a PUSCH among the multiple PUSCHs and associated with a smallest control resource set (CORESET) group index;
an earliest PUSCH that starts transmission among the multiple PUSCHs;
an earliest scheduled PUSCH among the multiple PUSCHs; or
a PUSCH among the multiple PUSCHs that has a highest modulation and coding scheme (MCS) level.

26. The method according to any one of claims 5 to 7 and 17 to 25, wherein the multiple PUSCHs comprise one or more of the following:
multiple PUSCHs scheduled by multiple DCI;
one or more PUSCHs scheduled by single DCI; or
one or more configured grant PUSCHs.

27. The method according to any one of claims 5 to 7 and 17 to 26, wherein the multiple PUSCHs comprise: multiple PUSCHs associated with different spatial information, or multiple PUSCHs associated with the same spatial information.

28. The method according to any one of claims 8 to 12 and 17 to 25, wherein the multiple PUCCHs comprise one or more of the following:
multiple PUCCHs scheduled by single DCI and transmitted in a single frequency network (SFN) manner;
multiple PUCCHs scheduled by single DCI and transmitted in a space division multiplexing (SDM) manner; or
multiple PUCCHs scheduled by multiple DCI.

29. The method according to any one of claims 8 to 12, 17 to 25, and 28, wherein the multiple PUCCHs comprise: multiple PUCCHs associated with different spatial information, or multiple PUCCHs associated with the same spatial information.

30. The method according to any one of claims 3, 6, 7, 9 to 11, 13, and 17 to 21, wherein the spatial information comprises one or more of the following:
a joint TCI state;
an UL TCI state;
a control resource set group index;
an SRS resource set;
a reference signal corresponding to spatial relation;
a reference signal corresponding to a quasi-co-located (QCL) of a type D;
an antenna panel identifier;
a TRP index; or
a beam index.

31. The method according to any one of claims 1 to 30, wherein the first higher-layer parameter comprises: a hybrid automatic repeat request (HARQ) feedback mode configuration.

32. The method according to claim 31, wherein configuration information of the HARQ feedback mode configuration comprises: separate feedback or joint feedback.

33. A communication method, comprising:
configuring, by a network device, for a terminal device at least one of: a first higher-layer parameter or a first transmission manner; and
receiving, by the network device, uplink control information (UCI) carried by one or more physical uplink control channels (PUCCHs) transmitted by the terminal device according to a multiplexing manner corresponding to at least one of: the first higher-layer parameter or the first transmission manner.

34. The method according to claim 33, wherein configuring, by the network device, the first transmission manner comprises:
configuring, by the network device, the terminal device with the first transmission manner; or
not configuring, by the network device, the terminal device with the first transmission manner.

35. The method according to claim 34, wherein the first transmission manner comprises: PUCCH and physical uplink shared channel (PUSCH) that are associated with different spatial information being capable of simultaneous transmission.

36. The method according to any one of claims 33 to 35, wherein the configuration information of the first higher-layer parameter comprises a first value or a second value.

37. The method according to any one of claims 33 to 36, wherein the multiplexing manner corresponding to at least one of the first higher-layer parameter or the first transmission manner comprises:
when one PUCCH of the terminal device overlaps with multiple PUSCHs of the terminal device in a time domain, or one PUCCH of the terminal device and multiple PUSCHs of the terminal device are transmitted within a first time unit, in a case where the network device configures the terminal device with the first transmission manner, and the terminal device is configured with a PUSCH transmission scheduled by multiple downlink control information (DCI), the multiplexing manner is: multiplexing UCI carried by the one PUCCH into a first PUSCH,
wherein spatial information associated with the PUCCH is the same as spatial information associated with the first PUSCH, and the multiple PUSCHs comprise the first PUSCH.

38. The method according to any one of claims 33 to 36, wherein the multiplexing manner corresponding to at least one of the first higher-layer parameter or the first transmission manner comprises:
when one PUCCH of the terminal device overlaps with multiple PUSCHs of the terminal device in a time domain, or one PUCCH of the terminal device and multiple PUSCHs of the terminal device are transmitted within a first time unit, in a case where the network device configures the terminal device with the first transmission manner, and the terminal device is configured with a PUSCH transmission scheduled by multiple DCI, the multiplexing manner is:
if the configuration information of the first higher-layer parameter is a first value, multiplexing UCI carried by the one PUCCH into a first PUSCH, wherein spatial information associated with the PUCCH is the same as spatial information associated with the first PUSCH, and the multiple PUSCHs comprise the first PUSCH; and
if the configuration information of the first higher-layer parameter is a second value, multiplexing UCI carried by PUCCH into a second PUSCH.

39. The method according to any one of claims 33 to 36, wherein the multiplexing manner corresponding to at least one of the first higher-layer parameter or the first transmission manner comprises:
when multiple PUCCHs of the terminal device overlap with one PUSCH of the terminal device in a time domain, or multiple PUCCHs of the terminal device and one PUSCH of the terminal device are transmitted within a first time unit, in a case where the network device configures the terminal device with the first transmission manner, the multiplexing manner is: multiplexing UCI carried by a first PUCCH into the PUSCH,
wherein spatial information associated with the first PUCCH is the same as spatial information associated with the PUSCH, and the multiple PUCCHs comprise the first PUCCH.

40. The method according to any one of claims 33 to 36, wherein the multiplexing manner corresponding to at least one of the first higher-layer parameter or the first transmission manner comprises:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a first value, multiplexing UCI carried by a first PUCCH into the PUSCH and not transmitting other PUCCHs among the multiple PUCCHs excluding the first PUCCH,
wherein spatial information associated with the first PUCCH is the same as spatial information associated with the PUSCH, and the multiple PUCCHs comprise the first PUCCH.

41. The method according to any one of claims 33 to 36, wherein the multiplexing manner corresponding to at least one of the first higher-layer parameter or the first transmission manner comprises:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a first value, then:
in a case where a priority corresponding to priority indexes of the multiple PUCCHs is higher than a priority corresponding to a priority index of the PUSCH, transmitting the multiple PUCCHs and not transmitting the PUSCH; and
in a case where the priority corresponding to the priority indexes of the multiple PUCCHs is lower than or equal to the priority corresponding to the priority index of the PUSCH, multiplexing UCI carried by a first PUCCH into the PUSCH and not transmitting other PUCCHs among the multiple PUCCHs excluding the first PUCCH, wherein spatial information associated with the first PUCCH is the same as spatial information associated with the PUSCH, and the multiple PUCCHs comprise the first PUCCH.

42. The method according to any one of claims 33 to 36, wherein the multiplexing manner corresponding to at least one of the first higher-layer parameter or the first transmission manner comprises:
when multiple PUCCHs of the terminal device overlap with one PUSCH of the terminal device in a time domain, or multiple PUCCHs of the terminal device and one PUSCH of the terminal device are transmitted within a first time unit, in a case where the network device does not configure the terminal device with the first transmission manner, the multiplexing manner is:
if the configuration information of the first higher-layer parameter is a second value, multiplexing UCI carried by the multiple PUCCHs into the PUSCH.

43. The method according to any one of claims 33 to 42, before configuring, by the network device, the first transmission manner, the method further comprises:
receiving, by the network device, a first capability transmitted by the terminal device, wherein the first capability is used to indicate that the terminal device supports simultaneous transmission of PUCCH and PUSCH that are associated with different spatial information.

44. The method according to any one of claims 33 to 43, wherein configuring, by the network device, the first transmission manner comprises:
transmitting, by the network device, configuration information of the first transmission manner to the terminal device.

45. The method according to claim 44, wherein transmitting, by the network device, the configuration information of the first transmission manner to the terminal device comprises:
transmitting, by the network device, a second higher-layer parameter or a media access control control element (MAC CE) to the terminal device, wherein the second higher-layer parameter or the MAC CE carries the configuration information of the first transmission manner.

46. The method according to claim 45, wherein the second higher-layer parameter comprises one or more of the following:
a PUCCH configuration;
a PUCCH resource;
a PUCCH resource group;
a transmission configuration indicator (TCI) state;
a TCI uplink state; or
a PUSCH configuration.

47. The method according to any one of claims 43 to 46, further comprising: receiving, by the network device, a second capability from the terminal device, wherein the second capability is used to indicate that the terminal device supports simultaneous transmission of multiple PUCCHs associated with different spatial information.

48. The method according to claim 47, further comprising: transmitting, by the network device, configuration information of a second transmission manner to the terminal device, wherein the configuration information of the second transmission manner indicates that the terminal device is configured with the second transmission manner or the terminal device is not configured with the second transmission manner.

49. The method according to claim 48, wherein the second transmission manner comprises: multiple PUCCHs associated with different spatial information being capable of simultaneous transmission.

50. The method according to claim 48 or 49, wherein transmitting, by the network device, the configuration information of the second transmission manner to the terminal device comprises:
transmitting, by the network device, a third higher-layer parameter or an MAC CE to the terminal device, wherein the third higher-layer parameter or the MAC CE carries the configuration information of the second transmission manner.

51. The method according to claim 50, wherein the third higher-layer parameter comprises one or more of the following:
a PUCCH configuration;
a PUCCH resource;
a PUCCH resource group;
a TCI state; or
a TCI uplink state.

52. The method according to any one of claims 33 to 36, wherein the multiplexing manner corresponding to at least one of the first higher-layer parameter or the first transmission manner comprises:
when multiple PUCCHs of the terminal device overlap with multiple PUSCHs of the terminal device in a time domain, or multiple PUCCHs of the terminal device and multiple PUSCHs of the terminal device are transmitted within a first time unit, in a case where the configuration information of the first higher-layer parameter is a first value, the multiplexing manner is: respectively multiplexing UCI carried by one or more of the multiple PUCCHs into a first PUSCH corresponding to the PUCCH,
wherein spatial information associated with the PUCCH is the same as spatial information associated with the first PUSCH corresponding to the PUCCH, and the multiple PUSCHs comprise the first PUSCH.

53. The method according to any one of claims 33 to 36, wherein the multiplexing manner corresponding to at least one of the first higher-layer parameter or the first transmission manner comprises:
when multiple PUCCHs of the terminal device overlap with multiple PUSCHs of the terminal device in a time domain, or multiple PUCCHs of the terminal device and multiple PUSCHs of the terminal device are transmitted within a first time unit, in a case where the configuration information of the first higher-layer parameter is a second value, the multiplexing manner is: multiplexing UCI carried by one or more of the multiple PUCCHs into a second PUSCH.

54. The method according to claim 38 or 53, wherein the second PUSCH comprises one or more of the following:
a PUSCH among the multiple PUSCHs and associated with a first joint TCI state or an uplink (UL) TCI state;
a PUSCH among the multiple PUSCHs and associated with a smallest antenna panel identifier or a smallest transmission reception point (TRP) index;
a PUSCH among the multiple PUSCHs and associated with a smallest sounding reference signal (SRS) resource set index;
a PUSCH among the multiple PUSCHs and associated with a smallest reference signal resource index or a smallest reference signal resource set index;
a PUSCH among the multiple PUSCHs and associated with a smallest control resource set (CORESET) group index;
an earliest PUSCH that starts transmission among the multiple PUSCHs;
an earliest scheduled PUSCH among the multiple PUSCHs; or
a PUSCH among the multiple PUSCHs that has a highest modulation and coding scheme (MCS) level.

55. The method according to any one of claims 37, 38, and 52 to 54, wherein the multiple PUSCHs comprise one or more of the following:
multiple PUSCHs scheduled by multiple DCI;
one or more PUSCHs scheduled by single DCI; or
one or more configured grant PUSCHs.

56. The method according to any one of claims 37, 38, and 52 to 54, wherein the multiple PUSCHs comprise: multiple PUSCHs associated with different spatial information, or multiple PUSCHs associated with the same spatial information.

57. The method according to any one of claims 33 to 56, wherein the multiple PUCCHs comprise one or more of the following:
multiple PUCCHs scheduled by single DCI and transmitted in a single frequency network (SFN) manner;
multiple PUCCHs scheduled by single DCI and transmitted in a space division multiplexing (SDM) manner; or
multiple PUCCHs scheduled by multiple DCI.

58. The method according to any one of claims 33 to 57, wherein the multiple PUCCHs comprise: multiple PUCCHs associated with different spatial information, or multiple PUCCHs associated with the same spatial information.

59. The method according to any one of claims 35, 37 to 41, 43, 47 to 52, 56, and 58, wherein the spatial information comprises one or more of the following:
a joint TCI state;
an UL TCI state;
a control resource set group index;
an SRS resource set;
a reference signal corresponding to spatial relation;
a reference signal corresponding to a quasi-co-located (QCL) of a type D;
an antenna panel identifier;
a TRP index; or
a beam index.

60. The method according to any one of claims 33 to 59, wherein the first higher-layer parameter comprises: a hybrid automatic repeat request (HARQ) feedback mode configuration.

61. The method according to claim 60, wherein configuration information of the HARQ feedback mode configuration comprises: separate feedback or joint feedback.

62. A terminal device, comprising:
a first processing unit, configured to determine a multiplexing manner according to at least one of: configuration information of a first higher-layer parameter or configuration information of a first transmission manner; and
a first transceiver unit, configured to transmit uplink control information (UCI) carried by one or more physical uplink control channels (PUCCHs) according to the multiplexing manner.

63. A network device, comprising:
a second processing unit, configured to configure for a terminal device at least one of: a first higher-layer parameter or a first transmission manner; and
a second transceiver unit, configured to receive uplink control information (UCI) carried by one or more physical uplink control channels (PUCCHs) transmitted by the terminal device according to a multiplexing manner corresponding to at least one of: the first higher-layer parameter or the first transmission manner.

64. A chip, comprising: a processor, configured to invoke a computer program from a memory and execute the computer program, to enable a device equipped with the chip to perform the method according to any one of claims 1 to 32 or 33 to 61.

65. A computer-readable storage medium, configured to store a computer program, wherein the computer program, when executed by a device, enables the device to perform the method according to any one of claims 1 to 32 or 33 to 61.

66. A computer program product, comprising computer program instructions, wherein the computer program instructions enable a computer to perform the method according to any one of claims 1 to 32 or 33 to 61.

67. A computer program, wherein the computer program enables a computer to perform the method according to any one of claims 1 to 32 or 33 to 61.

68. A communication system, comprising:
a terminal device, configured to perform the method according to any one of claims 1 to 32; and
a network device, configured to perform the method according to any one of claims 33 to 61.
